# EUROPEAN PATENT SPECIFICATION

(11) **EP 4 299 968 B1**
(45) Date of publication and mention of the grant of the patent: **24.12.2025**
(21) Application number: 23181001.1
(22) Date of filing: 22.06.2023
(51) Int. Cl.: F16N 7/38, F16N 25/00, F16N 29/00

(54) **MONITORING THE OPERATION OF A LUBRICATION APPARATUS**
ÜBERWACHUNG DES BETRIEBS EINER SCHMIERVORRICHTUNG
SURVEILLANCE DU FONCTIONNEMENT D'UN APPAREIL DE LUBRIFICATION

(30) Priority: 01.07.2022 SE 2250827
(43) Date of publication of application: 03.01.2024
(73) Proprietor: Durable Devices AB, 247 98 Genarp (SE)
(72) Inventor: LUNDBERG, Stefan, 22456 Lund (SE); MADSEN, Patrik, 24798 Genarp (SE); ALM, Carl Axel, 22460 Lund (SE)
(74) Representative: Neij & Lindberg AB

(56) References cited:
- CN-A- 114 001 266
- JP-A- 2011 052 770
- JP-A- H0 861 591
- US-A- 5 038 893
- US-A1- 2005 003 036
- US-A1- 2017 152 992

## Description

### Technical Field

The present disclosure relates generally to automatic lubrication systems comprising at least one lubrication apparatus for supplying a lubricant to one or more lubrication points, and in particular to a technique of monitoring the operation of the at least one lubrication apparatus.

### Background Art

Automatic lubrication systems perform the task of supplying lubrication points on one or more machines with a varying or non-varying amount of exactly metered lubricant to ensure that no lubrication point is over-lubricated or under-lubricated. Over- or under-lubrication may negatively influence a machine component's service life and may result in machine breakdown.

In an automatic lubrication system, a lubricant is fed to one or more lubrication points using a lubrication apparatus ("lubricator") comprising a feeding mechanism that ensures that the lubricant is dispensed in the required amount. Depending on implementation, the feeding mechanism may comprise a positive displacement pump, a preloaded spring, or a gas-driven expansion chamber. A lubrication apparatus may be configured for connection to one lubrication point ("single-point lubrication") or plural lubrication points ("multi-point lubrication"). Single-point lubrication systems are typically configured as a unitary device which is attached to a nipple on the machine. Multi-point lubrication systems come in many variants, including Single Line Resistance systems, Series Progressive systems, Dual Line Parallel systems, Single Line Parallel systems, and Multi Point Direct systems.

The consequences of a malfunctioning lubrication system may be costly, both in terms of the cost for repairing a failing machine and the cost for the standstill of the machine. Malfunctions may arise for different reasons and at different locations within a lubrication system. For example, malfunctions may be caused by incorrect configuration, drained power source, drained supply of lubricant, clogging, leaks, etc. The risk for malfunctions is elevated when a lubrication system is used in harsh environments (vibrations, temperature variations, moisture, etc.). There may be several lubrication points on a single machine, and the number of lubrication points may become excessive in complex mechanical arrangements, such as a factory. Correspondingly, it is a complex task to ensure operability of a lubrication system over time.

US2013/0015019 discloses a multi-point lubrication system in which a computerized control center is arranged to provide a doser with a control signal for adjusting the amount of lubricant fed by the doser to a lubrication point. A monitoring unit is provided to measure the pressure, temperature, viscosity, vibration and/or power of a specific lubrication point as well as the current level of lubrication to the specific lubrication point. Also, the grease level in a reservoir may be monitored. In some examples, the pressure levels in one or more main lines extending to a doser group is monitored and controlled for adjustment of the dosed amount of grease. In these examples, the pressure levels affect the amount of grease that is supplied by the doser group.

US2018/0195667 proposes to mount lubrication rate sensors, such as venturi based pressure differential rate sensors, at lubrication points to monitor the exact quantity of oil injected by a lubrication system. This type of lubrication rate sensor is mainly suitable for oil. The measured lubrication rate is used for feedback control of a lubricator pump. US2018/0195667 also proposes to provide a system for monitoring wear components and delivering correct lubrication levels. Premature wear and failure is detected through a network of wireless sensors. Failure is detected based on acoustic emission signals measured by vibration sensors. Piston wear is detected by monitoring the dynamic pressure in the cylinder of the lubricator pump. The system also monitors the quantity of oil injected, measured by the lubrication rate sensors, and triggers an alarm when deviations are detected.

US2016/0208983 proposes to control a motor-driven positive displacement pump based on the current supplied to the electric motor. The motor current signal is converted to pulses by thresholding and the number of pulses is counted. Each pulse corresponds to a known amount of lubricant, and the current to the pump is controlled to control the amount of lubricant dispensed by the lubrication system. A corresponding technique of determining one or more lubrication parameters based on a detected periodicity in a motor current signal is disclosed in US2021/0102663. This technique requires access to the motor current and may be non-trivial to implement on existing lubrication systems.

The prior art also comprises US5038893A and JP H0861591 A, which discloses a monitoring apparatus for pressure-based detection of leakage and clogging in a grease supply system.

### Brief Summary

It is an objective to at least partly overcome one or more limitations of the prior art.

Another objective is to provide a technique of monitoring the operation of a lubrication apparatus in a lubrication system.

Yet another objective is to provide such a technique that is simple to install in existing lubrication systems.

A further objective is to provide a monitoring technique capable of quantifying the amount of lubricant supplied to an individual lubrication point.

One or more of these objectives, as well as further objectives that may appear from the description below, are at least partly achieved by a system for monitoring a lubrication system, and a method according to the independent claims, embodiments thereof being defined by the dependent claims.

Still other objectives, as well as features, aspects and technical effects will appear from the following detailed description, from the attached claims as well as from the drawings.

### Brief Description of Drawings

FIG. 1A is a block diagram of an example lubrication system comprising a monitoring system in accordance with embodiments, and FIG. 1B is a block diagram of an example calculation arrangement in the monitoring system.
FIGS 2A-2E are plots of measured fluid pressure over time in lubrication paths between a lubrication apparatus and a lubrication point in different installation examples.
FIGS 3A-3B are flow charts of an example method performed by a monitoring system in accordance with embodiments.
FIGS 4A-4B illustrate predefined parameters and predefined time periods, respectively, for use by a method and a system in accordance with embodiments.
FIG. 5 is a flow chart of a procedure for data reduction of measured pressure data.
FIG. 6A is a flow chart of an example method of processing pressure data representing fluid pressure in a lubrication path, FIGS 6B-6C illustrate a technique of populating an array by a reduced set of pressure data, and FIG. 6D is a flow chart of a pulse search algorithm for use by the method in FIG. 6A.
FIG. 7 is a flow chart of an example method of evaluating an operating status at a plurality of lubrication points.
FIG. 8 shows an example graphical interface for presenting data for sensor devices arranged at a plurality of different lubrication points.
FIG. 9 is a diagrammatic overview of a monitoring system in accordance with embodiments.
FIGS 10A-10B are side and section views of a single-point lubrication device comprising a sensor device of an example monitoring system, FIG. 10C is an enlarged side view, with internal parts visible, of a fixed-format restriction element for installation in a mounting portion of the sensor device in FIGS 10A-10B, and FIG. 10D is a section view of an adjustable restriction element.
FIG. 11 is a block diagram of an example calculation device included in a monitoring system in accordance with embodiments.

### Detailed Description of Example Embodiments

Embodiments will now be described more fully hereinafter with reference to the accompanying schematic drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements.

Also, it will be understood that, where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. As used herein, "at least one" shall mean "one or more" and these phrases are intended to be interchangeable. Accordingly, the terms "a" and/or "an" shall mean "at least one" or "one or more", even though the phrase "one or more" or "at least one" is also used herein. As used herein, except where the context requires otherwise owing to express language or necessary implication, the word "comprise" or variations such as "comprises" or "comprising" is used in an inclusive sense, that is, to specify the presence of the stated features but not to preclude the presence or addition of further features in various embodiments. The term "compute", and derivatives thereof, is used in its conventional meaning and may be seen to involve performing a calculation involving one or more mathematical operations to produce a result, for example by use of a computer.

As used herein, the terms "multiple", "plural" and "plurality" are intended to imply provision of two or more elements. The term "and/or" includes any and all combinations of one or more of the associated listed elements.

It will furthermore be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing the scope of the present disclosure.

Well-known functions or constructions may not be described in detail for brevity and/or clarity. Unless otherwise defined, all terms (including technical and scientific terms) used herein have the same meaning as commonly understood by one of ordinary skill in the art to which this disclosure belongs.

Like numerals refer to like elements throughout.

As used herein, the term "lubricant" refers to any substance that may be administered to reduce friction, heat or wear when introduced between solid surfaces. Non-limiting examples of lubricants include oils and greases.

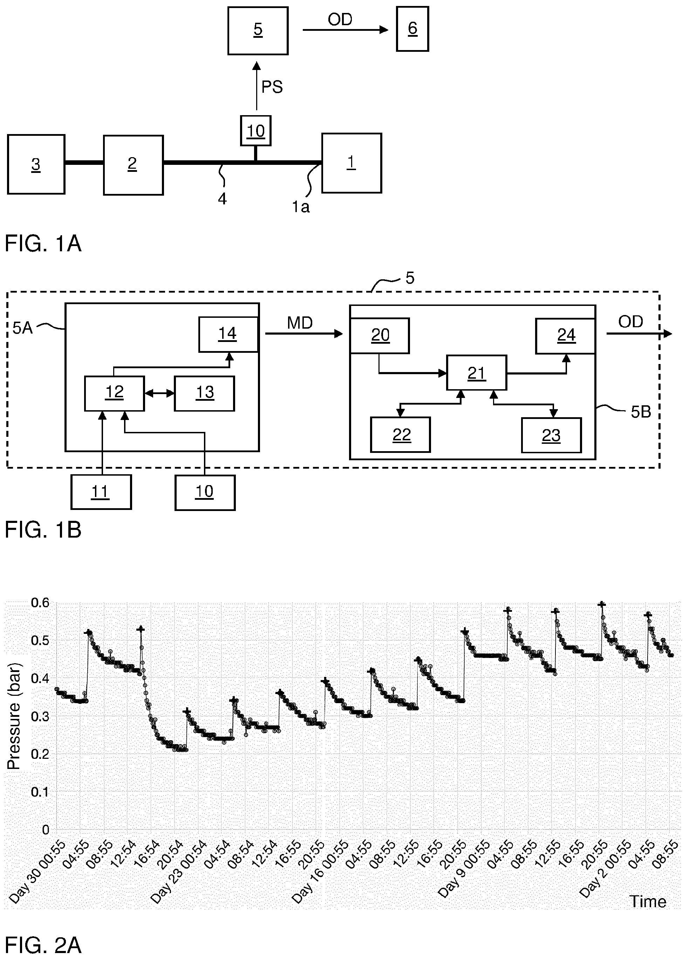

The present disclosure relates to a technique of monitoring the operation of a lubrication apparatus in a lubrication system. FIG. 1A is a schematic diagram of such a system, which is fluidly connected to supply a lubricant to a machine 1 at a lubrication point 1a. The lubrication point 1a, for example a nipple, is fluidly connected to distribute the lubricant to an object in the machine 1. The object may be any part, portion or member that should be lubricated and may or may not be movable. The machine 1 may be any type of apparatus, device or industrial system. In some examples, the object is or comprises a bearing, guide, spindle, joint, gear, chain, etc. Although not shown in FIG. 1A, the machine 1 may comprises a plurality of lubrication points.

In the illustrated example, the lubrication system comprises a lubrication apparatus 2, which operable to dispense a controlled amount of lubricant from a supply 3. The lubrication apparatus 2 ("lubricator") is fluidly connected on a lubrication path 4 to the lubrication point 1a. The lubricator 2 may be of any conventional type and is also known as dispenser, distributor, or doser in the art. The lubrication path 4 may be defined by a separate tube or line, as shown, or be integrated into the lubricator 2. Likewise, the lubricant supply 3 may be a separate container or reservoir, as shown, or be integrated with the lubricator 2. The lubrication system in FIG. 1A is a so-called single-point system, in which a single lubricator is connected to serve a single lubrication point 1a. The lubrication system may alternatively be a multi-point system, which is fluidly connected to serve a plurality of lubrication points by use of one or more lubricators.

The following description presumes that there is a pulsating flow of lubricant in the lubrication path 4 when the lubricator 2 is operated to dispense the lubricant. In some embodiments, the lubricator 2 is designed to dispense the lubricant in discrete amounts, thereby causing pressure pulsations in the lubrication path 4. The pulsations are thus inherent to the operation of the lubricator 2. For example, the lubricator 2 may comprise a positive displacement pump of any type, including but not limited to rotary type, reciprocating type, linear type, or diaphragm type.

The present disclosure is based on the insight that the pressure pulsations in the lubrication path 4 may be used for monitoring the operation of the lubrication system. For example, absence of pressure pulsations may indicate a complete failure of the lubricator 2. Too many or too few pressure pulsations per unit time may indicate over-lubrication and under-lubrication, respectively. If the amount of lubricant dispensed by each pulsation is known, lubrication may be quantified. It is also possible to estimate when the lubricant supply 3 will be empty and need to be replaced or refilled, thereby enabling pre-emptive maintenance. Measurement of pressure in the lubrication path 4 may be performed with minimum modification of existing lubrication systems, by simply installing one or more pressure sensors with suitable sensitivity and response time to detect the pulsations. It may even be possible to use pre-existing pressure sensor(s), if present, in the lubrication system. Depending on type of lubrication system and placement of the pressure sensor, an individual lubrication point 1a or a group of lubrication points 1a may be monitored.

A monitoring system that based on this principle is installed in the lubrication system of FIG. 1A. The monitoring system comprises a pressure sensor 10, which is arranged to measure fluid pressure in the lubrication path 4 at a location downstream of the lubricator 2 and upstream of the lubrication point 1a. The pressure sensor 10 is operable to generate a pressure signal, PS, that represents the time profile of fluid pressure in the path 4. The pressure sensor 10 may be of any type and may or may not be in contact with the lubricant in the path 4. The monitoring system also includes a calculation arrangement 5, which is configured to receive and process the pressure signal. The processing results in operational data, OD, for the lubricator 2 in relation to the lubrication point 1a. As shown, the calculation arrangement 5 may be configured to output OD for presentation and/or storage on a separate device 6, which may or may not be part of the monitoring system.

The pressure signal may be transferred by wire or wirelessly to the calculation arrangement 5. The calculation arrangement 5 may be implemented on a single device, which may be located at the premises of the machine 1 or at a remote location. For example, the calculation arrangement 5 may be implemented by local computer or a web server.

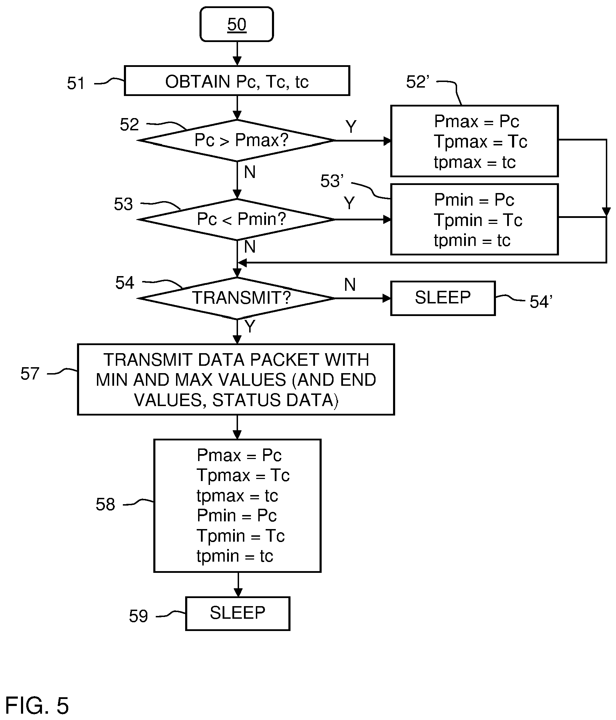

In some embodiments, the calculation arrangement 5 is partitioned or distributed between two or more devices, for example a local device and a remote device. An example of a partitioning is shown in FIG. 1B. The calculation arrangement 5 comprises a first calculation device 5A, which may be local, and a second calculation device 5B, which may be remote. The first device 5A is connected to receive the pressure signal from the pressure sensor 10. In some embodiments, the first device 5A is configured to process the pressure data for data reduction and include a resulting dataset ("reduced pressure data") in measurement data, MD, which is transmitted to the second device 5B, by wire or wirelessly. An example of the data reduction will be described with reference to FIG. 5. The second device 5B is configured to process MD for detection of pressure pulses. The data reduction will reduce both the computational workload of the second device 5B and the data transmission between the first and second devices 5A, 5B. It is realized that the data reduction may be particularly beneficial when MD is wirelessly transmitted to the second device 5B.

The partitioning of the calculation arrangement 5 provides scalability. For example, the second device 5B may be configured to receive and process MD from a plurality of first devices 5A, where each first device 5A is configured to include a respective identifier in the MD. The second device 5B is thereby operable to generate OD for a plurality of lubricators 2 and/or lubrication points 1a. Alternatively or additionally, the first device 5A may be configured to receive and process pressure signals from a plurality of pressure sensors 10 in different lubrication paths 4 and associate the resulting data in MD with an identifier of the respective pressure sensor to enable the second device 5B to generate OD for a plurality of lubricators 2 and/or lubrication points 1a.

In the example of FIG. 1B, the calculation arrangement 5 is also connected to a temperature sensor 11, which is arranged to measure the temperature of the lubricant in the lubrication path 4. The temperature sensor 11 may be arranged in the lubricator 2, the lubrication path 4 or the machine 1. The temperature sensor 11 may be a pre-existing sensor or be installed as part of the monitoring system. As will be described in detail below, the temperature data from the temperature sensor 11 may be included in OD or be applied to improve pulse detection.

In the example of FIG. 1B, the first device 5A comprises a control unit 12 which controls the operation of the first device 5A and is connected to the pressure sensor 10 and the temperature sensor 11. As shown, the first device 5A may further comprise a pre-processing unit 13 and a communication unit 14. The pre-processing unit 13 is configured to process the pressure data for data reduction. The pre-processing unit 13 may also perform further processing, such as filtering, temperature adjustment, etc. The control unit 12 prepares MD based on the reduced pressure data produced by the pre-processing unit 13 and operates the communication unit 14 to transmit MD to the second device 5B.

In the example of FIG. 1B, the second device 5B comprises a first communication unit 20, a control device 21, a pulse detection unit 22, an analysis unit 23, and a second communication unit 24. Depending on implementation, the first and second communication units 20, 24 may be implemented by a single communication unit. The first communication unit 20 is operable to receive MD. The control unit 21 extracts the reduced pressure data from MD and operates the pulse detection unit 22 to detect pulses based on the reduced pressure data. Thereupon, the control unit 21 operates the analysis unit 23 on the detected pulses, if any, to determine an operational status of the lubricator 2.

The control unit 21 prepares OD based on the operational status from the analysis unit 23 and operates the communication unit 24 to output OD, for example by transfer to the device 6 in FIG. 1A.

To further illustrate the utility of the monitoring system, examples of pressure signals measured in different lubrication systems are presented in FIGS 2A-2D. The appearance of the pressure signal differs significantly depending on lubricant, length of lubrication path 4, and the configuration downstream of the lubrication point 1a. The pressure signals in FIGS 2A-2D all comprise pulses that correspond to lubricant being metered by a lubricator 2. Peaks of pulses are marked by a plus sign (+). The respective pulse has an initial rising edge, which corresponds to rapid build-up of fluid pressure in the lubrication path 4 as lubricant is pushed into the path 4 by the lubricator 2. The initial edge is followed by a decay phase, in which the lubricant overcomes resistance and flows into the lubrication point 1a, causing fluid pressure to gradually decrease in the lubrication path 4. The pressure profile during the decay phase may, for example, be approximated by a linear decrease or a logarithmic decrease. Other pressure profiles are conceivable. Typically, the spacing between pressure pulses is known and given by the configuration of the lubricator 2. For example, the pressure pulses may be periodic.

The pressure signal generally includes disturbances that are unrelated to the operation of the lubricator 2. The disturbances may be caused by the machine 1 that is lubricated or surrounding machinery. In one example, changes in temperature may affect the viscosity of the lubricant, causing variations in the measured pressure signal. The temperature may change as a result of changes in surrounding temperature or as a result of the operation of the machine. In another example, the flow resistance inside the machine 1 may change depending on the operation of the machine 1. Changes in temperature of the lubricant supply 3 may expand or contract the lubricant and result in slower pressure variations in the path 4. It is even conceivable that the sub-atmospheric pressure is temporarily formed inside the machine 1, thereby actively pulling lubricant into the lubrication point 1a.

Pressure may be measured as absolute pressure or relative to atmospheric pressure depending on pressure sensor. In most cases, the machine is placed on ground level and changes in atmospheric pressure due to height of the pressure sensor may be either ignored or canceled out with static or dynamic calibration.

FIG. 2A is a plot of a pressure signal for a time period of 30 days, in which lubrication is initiated approximately 3 times per week. The pulses have distinct rising edges and similar amplitudes and decay profiles. The base level before each pulse varies significantly over time, to the extent that the pulses are smaller in amplitude than the variation in pressure over the illustrated time period.

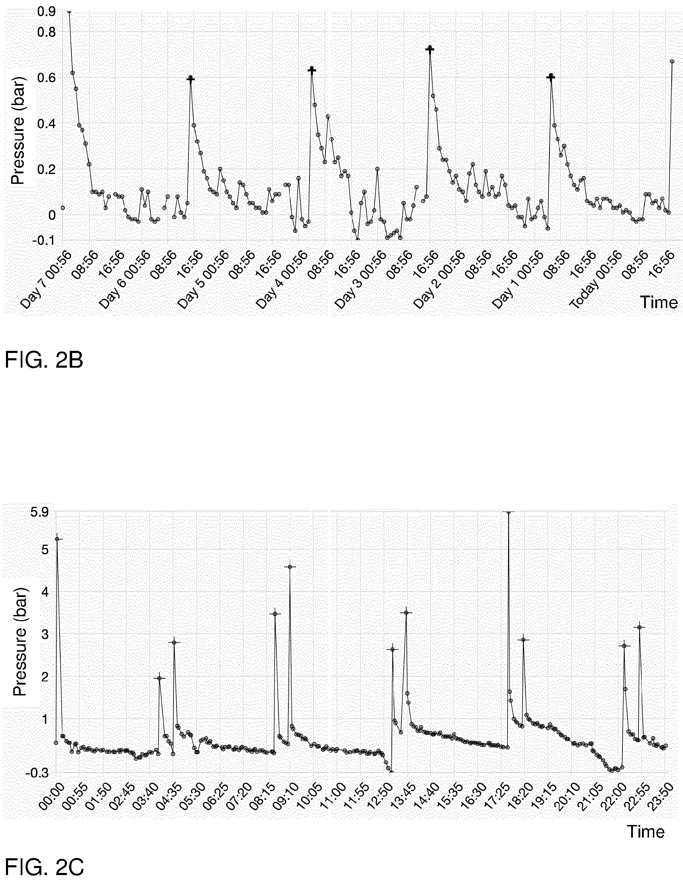

FIG. 2B is a plot of a pressure signal for a time period of slightly more than 7 days, in which lubrication is initiated approximately twice every three days. The pulses have distinct rising edges and similar amplitudes, but exhibit large fluctuations during the decay period after each rising edge. The base level is relatively constant over time.

FIG. 2C is a plot of a pressure signal for a time period of 24 hours, in which pairs of pulses with a separation of approximately 35 minutes are periodically generated approximately 5 times per day. The rising edges are distinct, but the base level and the amplitude varies between pulses.

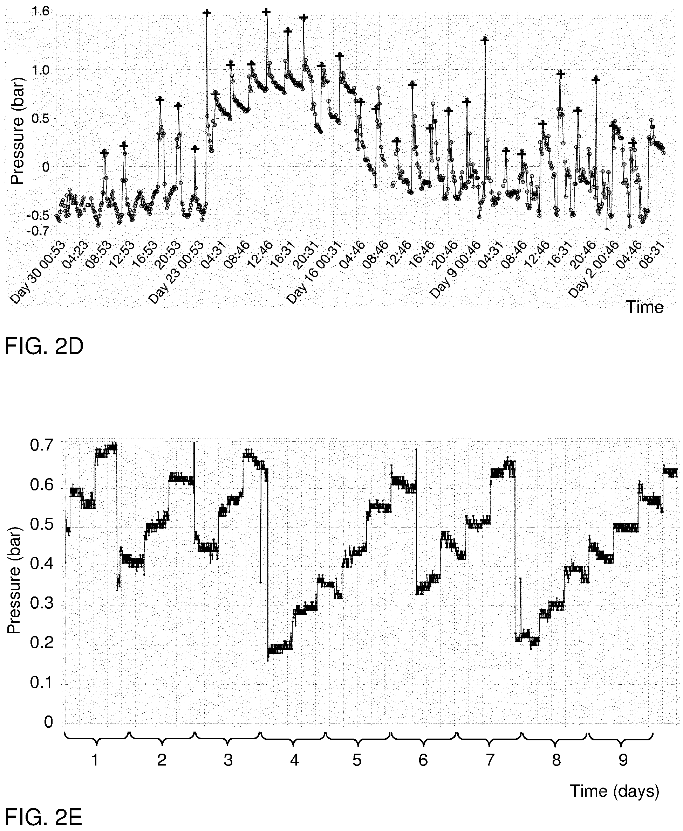

FIG. 2D is a plot of a pressure signal for a time period of 30 days, in which lubrication is initiated slightly more often than once a day. The pressure signal exhibits significant disturbances in terms of large variations in base level, pulse amplitude, and decay profile. It may be noted that that the base level varies between negative and positive pressure.

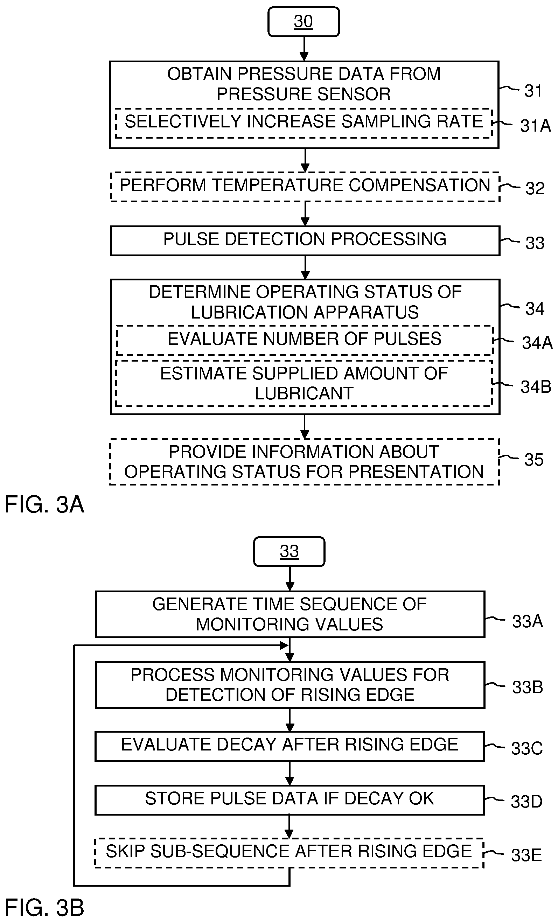

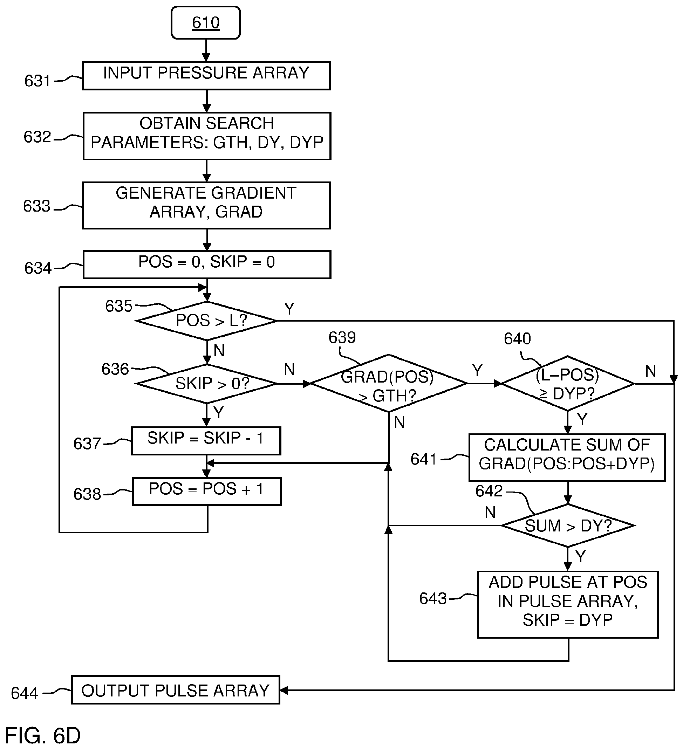

The skilled person understands that pulses may be detected in each of the pressure signals shown in FIGS 2A-2D by tailoring the detection to the respective pressure signal, so as to handle disturbances that are specific to an installation. However, this may require hands-on adaptation of the calculation arrangement 5 to each type of installation by experienced personnel. Further, the disturbances may differ significantly between pressure signals from different pressure sensors in a monitoring system, making adaptation even harder. It is generally desirable to configure the calculation arrangement 5 to handle as many disturbances as possible and in any combination. The overall methodology for such generic pulse detection will be described below with reference to FIG. 3B, and a detailed example will be given with reference to FIG. 6D.

FIG. 3A is a flow chart of an example monitoring method 30, which may be performed by the calculation arrangement 5. Dashed lines indicate optional steps. In step 31, pressure data is obtained from the pressure sensor 10. In step 33, the pressure data, or a pre-processed version thereof, is processed for detection of pulses representing the pulsating flow of lubricant in the lubrication path 4. In step 34, an operating status of the lubricator 2 is determined based on the detected pulses. As understood from the foregoing, the method 30 may further comprise a step of providing information about the operating status for presentation to a user.

The method 30 may be performed repeatedly, at consecutive time points, to determine the operating status of the lubricator 2 at the respective time point. The pressure data that is obtained in step 31 corresponds to a time window in the pressure signal from the pressure sensor 10. The method 30 may be repeated for overlapping or non-overlapping time windows.

Step 34 may be implemented on different levels of complexity. In some embodiments, step 34 detects an operational failure when pulses are absent in the pressure signal within a time period when pulses should be present. In some embodiments, as shown by step 34A, the number of detected pulses is counted and evaluated for detection of the operating status. For example, a malfunction may be detected when the number of pulses per unit time is outside a predefined range. The predefined range may be set for each lubrication point, for example by an operator of the monitoring system. In some embodiments, as shown by step 34B, the amount of lubricant that is supplied to the lubrication point is estimated based on the detected pulses. For example, the supplied amount of lubricant per unit time may be estimated by multiplying the number of pulses per unit time with a calibration value that designates the amount of lubricant per pulse. The calibration value may be specific to the type of lubricator, the individual lubricator, or the lubricator 2 as installed in the lubrication system. In an alternative, step 34B may estimate the amount of lubricant supplied by the respective pulse by calculating the area of the pulse in relation to its base level, and by multiplying the calculated area by a calibration value that relates area to amount. Step 34B may also comprise calculating the remaining amount of lubricant in the lubricant supply 3, based on the supplied amount of lubrication. For example, the remaining amount of lubricant in the supply 3 may be tracked by repeatedly, for each pulse, subtracting the supplied amount from a known starting amount of lubricant in the supply 3.

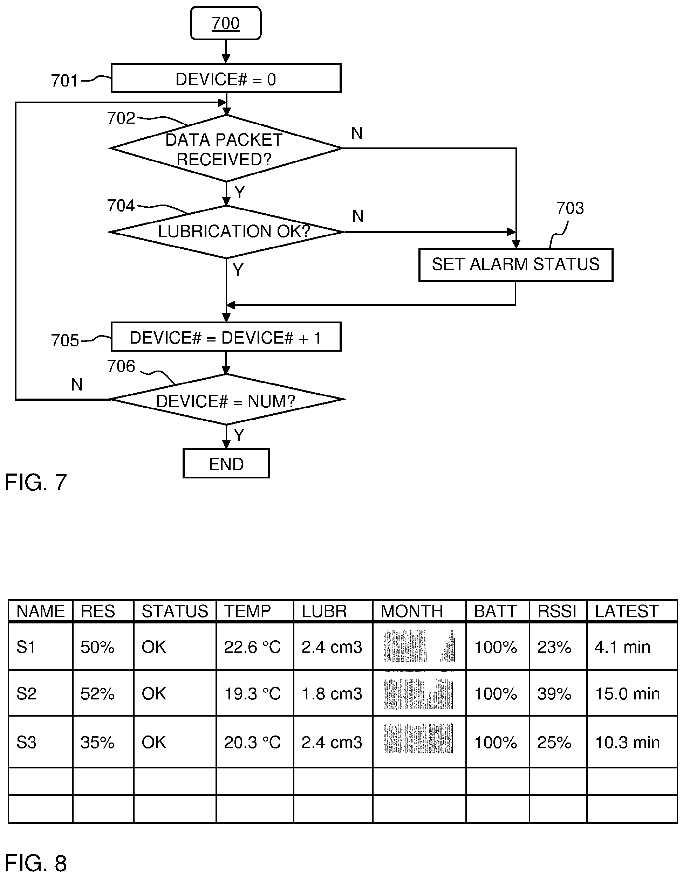

It is thus realized that the operating status determined in step 34 may take different forms. For example, the operating status may be represented as an indication of a malfunction, the number of pulses per unit time, the supplied amount of lubricant per unit time, the remaining amount of lubricant, etc. Further examples are presented below with reference to FIG. 8.

In some embodiments, step 31 involves a step 31A of actively controlling the sampling rate of the pressure signal. Specifically, the sampling rate may be selectively increased in synchronization with a predefined pulsation interval of the pulsating flow from the lubricator 2. In other words, a higher sampling rate is used only when a pulse is expected to occur in the pressure signal. For example, when the pressure signal is sampled at a first, higher sampling rate and a pulse is detected, the pressure signal may be sampled at a second, lower sampling rate for a time period when no pulses are expected. The second sampling rate may be zero. Optionally, the second sampling rate may be applied only if the latest pulse is detected with sufficient confidence. Step 31A presumes that the time interval between the pulsations in the lubrication path 4 is approximately known. The time interval may be entered by a user or be measured by the calculation arrangement 5 from pulses that have been previously detected in step 33. Step 31A will significantly reduce the power consumption of the calculation arrangement 5.

As noted above, variations in temperature may introduce disturbances in the pressure signal. Such disturbances may be counteracted by use of the temperature data from the sensor 11 in FIG. 1B. Step 32 may be introduced to perform a temperature compensation, in which measured pressure values are adjusted for the current temperature, given by one or more temperature values in the temperature data. The temperature compensation in step 32 may account for changes in viscosity and/or density of the lubricant with temperature. Step 32 may use calibration data that defines a correction to be applied to a pressure value as a function of current temperature. It is to be understood that step 33 is performed based on the adjusted pressure values if step 32 is included in the method 30.

The utility of the method 30 is further illustrated in FIG. 8, which shows an example of operational data that is generated by a monitoring system and presented to a user in a GUI on a display device, for example the device 6 in FIG. 1A. Here, the operational data is presented in the form of a table. Each row of the table corresponds to one lubrication point. Column NAME designates a user-defined name of the respective lubrication point, here S1, S2, S3. Column RES designates the remaining fraction of lubricant in the supply 3. Column STATUS indicates whether a malfunction has been detected or not. If a malfunction is detected, the status is changed to NOT OK. In addition, an audible alarm may be sounded and/or a notification indicating the failing lubrication point may be transmitted to a user, for example by email or text message. Column TEMP indicates the current temperature measured by the temperature sensor 11. Thus, in addition to being used for temperature compensation (step 32 in FIG. 3A), the temperature data from the sensor 11 may be presented to the user. Column LUBR includes an estimated amount of lubrication that has been supplied to the lubrication point. The presented amount may, for example, be given for a predefined time period (hour, day, week, etc.). Column MONTH includes a graphical representation of the supplied amount per time unit, here per day. Columns BATT and RSSI are related to the distributed configuration of the calculation arrangement 5 as shown in FIG. 1B, in which the first device 5A is powered by a battery and transmits MD on a wireless data channel. Column BATT indicates the battery status of the battery (remaining energy), and Column RSSI indicates the signal strength on the wireless data channel. Both the battery status and RSSI may be measured by the first device 5A and included in MD. Column LATEST indicates when data in the table was last updated.

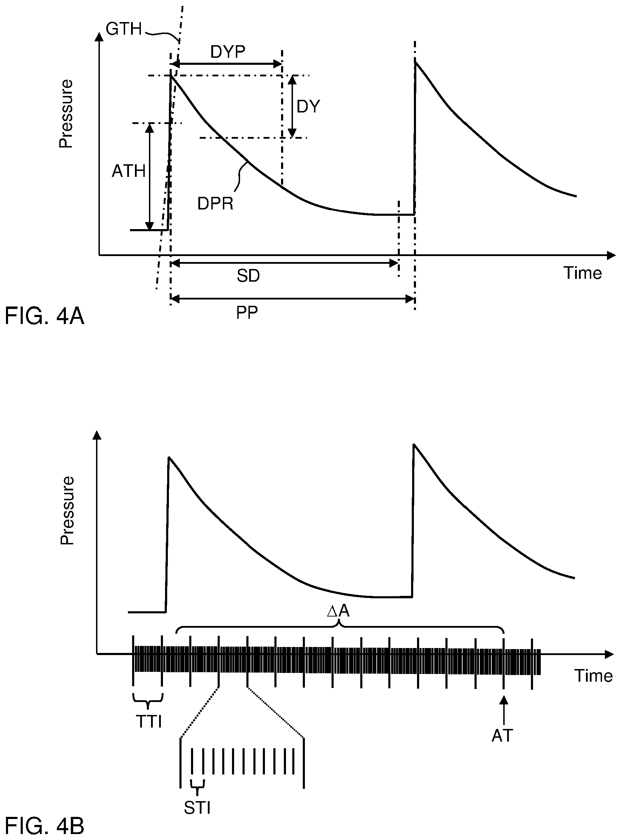

FIG. 3B is a flow chart of an example procedure for pulse detection that may be performed as part of step 33 in FIG. 3A. The procedure involves a rule-based search by use of search parameters that are defined in view of the distinct appearance of the pulses, in the form of a rising edge followed by a decay. The distinct appearance is represented in FIG. 4A together with examples of search parameters: a gradient threshold (GTH), an amplitude threshold (ATH), a decay threshold (DY) during a decay period (DYP), and a decay profile (DPR).

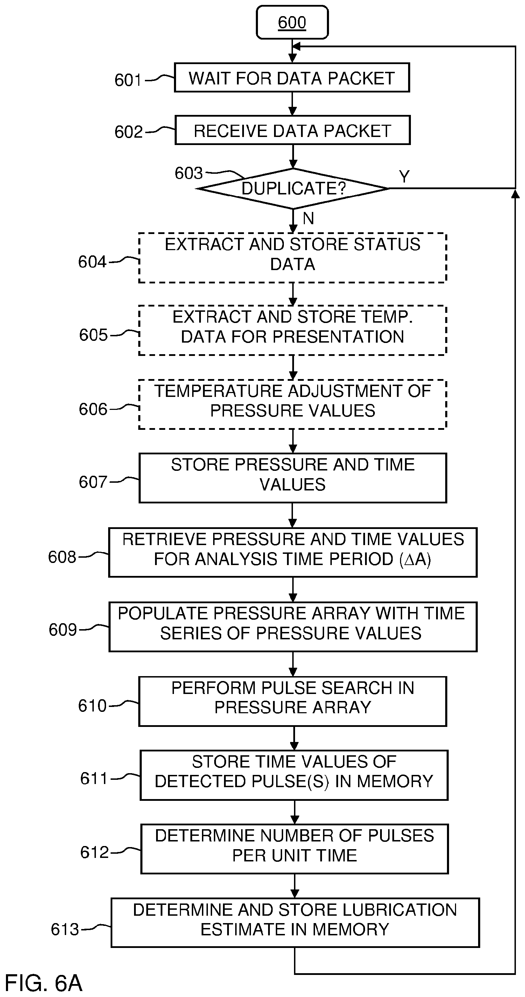

The procedure comprises a step 33A of generating a time sequence of monitoring values ("monitoring sequence") to be processed for detection of pulses. The monitoring sequence is generated based on the pressure data obtained in step 31, optionally after the temperature adjustment by step 32. The monitoring values are implicitly or explicitly associated with time points within the time window of the pressure data. Depending on implementation, the monitoring sequence may take different forms. In a first example, the monitoring sequence is identical to the pressure data. In a second example, the monitoring sequence is an up- or down-sampled version of the pressure data. In a third example, which is described more in detail below with reference to FIGS 6A-6C, the monitoring sequence is generated to represent the above-mentioned reduced pressure data. In a fourth example, the monitoring sequence is generated to represent a first-order derivative of the monitoring sequence according to the first, second or third examples. In the monitoring sequence of the fourth example, each monitoring value is thus a gradient value. The use of a monitoring sequence of gradient values may facilitate processing for pulse detection, as will be exemplified below with reference to FIG. 6D.

The procedure repeatedly performs steps 33B-33E to search for pulses in the monitoring sequence. The search is performed in a search direction, which may be forward or backward in time. By step 33B, the monitoring values are sequentially processed for detection of a rising edge. A rising edge may be detected when the difference between consecutive monitoring values exceeds GTH. Optionally, detection of a rising edge may further require that the rising edge has an amplitude that exceeds ATH. When a rising edge is found by step 33B, step 33C is performed to evaluate the monitoring values after the rising edge in relation to a predefined decay criterion. In this context, "after" refers to later in time. The predefined decay criterion may require that the magnitude of the decay is at least DY during DYP. Alternatively or additionally, the predefined decay criterion may require the monitoring values during DYP to correspond to (match) the DPR, for example that the deviation between the monitoring values and the DPR is below a maximum value. The deviation may be given by any aggregation of differences, for example sum or mean of absolute differences (SAD, MAD), sum of squares (SS), variance, etc. If the predefined decay criterion is fulfilled, a pulse is detected and corresponding pulse data is stored in step 33D. The pulse data includes at least the location of the pulse within the time window, and may include further pulse data, such as magnitude of the pulse (e.g., amplitude or area). The location of the pulse is defined or set in relation to the rising edge. In other words, the pulse is allocated at the rising edge. For example, the location may be set at the maximum derivative or the peak value of the rising edge. The procedure may then return to step 33B to continue processing the monitoring values starting from the rising edge. The procedure may be terminated when all monitoring values in the monitoring sequence has been processed by step 33B. As shown, the procedure may comprise an optional step 33E of skipping a predefined number of monitoring values in the search direction. Thus, by step 33E, step 33B jumps forward in the search direction by a predefined "skip distance", indicated by SD in FIG. 4A. The skip distance corresponds to a sub-sequence of monitoring values. The use of SD saves processing resources. Step 33E presumes that the minimum time interval PP (FIG. 4A) between pulses is known or estimated, and the skip distance is set to be less than this interval. Optionally, step 33E may be performed in dependence of a confidence value provided by step 33D. The confidence value indicates how well the detected pulse matches the distinct appearance of the pulses. If the confidence value exceeds a confidence threshold, step 33E may be performed.

It is realized that the values of the search parameters in FIG. 4A are installation-specific and may need to be adapted based on lubricant, lubricator, length of lubrication path, lubrication point, machine, etc. For example, search parameter values for processing of pressure data from a specific pressure sensor may be entered into the calculation arrangement 5 by a user or may be derived by the calculation arrangement 5 from a database based on installation data for the pressure sensor. Alternatively or additionally, the search parameter values may be adjusted during operation of the calculation arrangement 5. For example, the appearance of the pulses may change with viscosity, which is dependent on temperature. If temperature is measured (cf. sensor 11 in FIG. 1B), the search parameter values may be automatically adjusted based on temperature.

The detection of the rising edge in step 33B may benefit from information about the time interval ("pulse interval") between pulses in the pressure data from the pressure sensor 10. The pulse interval may be a nominal pulse interval, for example entered by a user, or be determined by processing the pressure data from the pressure sensor 10, for example based on previously detected pulses. In some embodiments, the sensitivity of the pulse detection in step 33B is selectively increased in synchronization with the pulse interval. For example, when the pulse interval is known or estimated, an expected occurrence time for a forthcoming pulse may be estimated whenever a new pulse has been detected, and the sensitivity may be temporarily increased in a time period around the expected occurrence time. In one example, the gradient threshold (GTH, FIG. 4A) is temporarily decreased to increase the sensitivity of detection. In a non-limiting example, the gradient threshold may be decreased by a factor of 1.5-4. Alternatively or additionally, the amplitude threshold (ATH, FIG. 4A) may be temporarily decreased. It is to be noted that the change of sensitivity in step 33B is beneficial whether or not the decay is evaluated in step 33C.

As an alternative to the rule-based search, machine learning may be used for detection of pulses in the monitoring sequence. For example, step 33B and/or step 33C may be modified to use a machine learning-based model, for example implemented by a neural network, which has been trained to detect pulses in the monitoring sequence. Data collected from different installations with different behavior may be collected to form a training set. Automatic or manual detection may be used to create this ground-truth which is used to train the neural network. For example, a deep learning-based neural network may be configured to ignore irrelevant fluctuations or other disturbances and accurately identify designated events, for example pulses. An AI network may also be configured to generate alarms automatically for different designated failures that are present in one or more signals representing pressure and/or temperature.

FIG. 5 is a flow chart of an example data reduction process 50 that may be performed by the first device 5A in the distributed calculation arrangement 5 of FIG. 1B. For example, the process 50 may be performed by the pre-processing unit 13. The process 50 significantly reduces the amount of data that is transmitted from the first device 5A to the second device 5B. The process 50 is implemented to detect characteristic values within time segments (TTIs) in the pressure signal and include the characteristic values and associated time points in the measurement data, MD, that is transmitted to the second device 5B. The characteristic values are selected to enable detection of pulses solely based on the characteristic values. In some embodiments, the characteristic values includes at least a minimum value and a maximum value within the TTI. All pressure values other than the characteristic values are excluded and thus not transmitted. The time points may be represented in any format that allows the respective characteristic value to be reproduced with its original location in the pressure signal. The characteristic values correspond to the above-mentioned "reduced pressure data".

The example in FIG. 5 presumes that the first device 5A operates in accordance with a scheme for data collection and data transmission as depicted in FIG. 4B. Measurement data, MD, is transmitted at regular time intervals, TTI (transmission time interval). During each TTI, pressure values are sampled at a sampling time interval, STI, which may or may not be fixed. In current implementations, the number of sampled pressure values within a TTI is in the range of 5-50.

The example process 50 is performed in accordance with the sampling time interval, STI. Between executions of the process 50, the first device 5A is in a power saving mode ("sleep mode"). The process 50 operates on parameters Pmax, Tmax, tpmax, Pmin, Tmin, tpmin, which are set to default values when the process 50 is first executed. In step 51, a current pressure value, Pc, is obtained from the pressure signal. The current pressure value is associated with a current time value, tc. In the illustrated example, step 51 also involves obtaining a current temperature value, Tc, from the temperature sensor (11 in FIG. 1B). In step 52, Pc is compared to Pmax. If Pc exceeds Pmax, step 52' is performed by setting Pmax to Pc, Tpmax to Tc, and tpmax to tc. Step 52' then proceeds to step 54. If Pc does not exceed Pmax, step 52 proceeds to step 53, in which Pc is compared to Pmin. If Pc is smaller than Pmin, step 53' is performed by setting Pmin to Pc, Tpmin to Tc and tpmin to tc. Step 53' then proceeds to step 54. If Pc is not smaller than Pmin, step 53 proceeds to step 54. In step 54, the current time value is evaluated in relation to the TTI. If TTI has not elapsed since the last data transmission, the process 50 proceeds to step 54', in which the process is terminated and the first device 5A is set in the sleep mode. If the TTI has elapsed, step 54 proceeds to step 57, in which maximum values (Pmax, Tpmax, tpmax) and minimum values (Pmin, Tmin, tpmin) are transmitted in a data packet for receipt by the second device 5B. The data packet corresponds to MD in FIG. 1B. In some embodiments, a plurality of identical data packets are transmitted in step 57. As indicated in in FIG. 5, end values may also be included in the data packet. The end values are given by the first and/or last pressure value obtained within the TTI, and associated temperature and time values. As also indicated in FIG. 5, the first device 5A may determine and include status data for its operation in the data packet. In one example, the status data includes a battery status (cf. FIG. 8). In another example, the status data includes a status of the data channel to the second device 5B, for example an RSSI value (cf. FIG. 8). In step 58, the parameters Pmax, Tmax, tpmax, Pmin, Tmin and tpmin are set to Pc, Tc, tc, Pc, Tc and tc, respectively, whereupon the process is terminated and the first device 5A is set in the sleep mode in step 58.

It is realized that the repeated execution of the process 50 provides a significant data reduction. The degree of data reduction depends on length of the TTI, which is set to be a fraction of the pulse duration in the pressure signal. It is currently believed that pulse detection is possible when TTI is less than 50% of the pulse duration. Pulse detection is improved with decreasing TTI, at the expense of a smaller data reduction. It is currently believed that good comprise between data reduction and pulse detection is achieved for TTI in the range of 1%-50% of the pulse duration, and preferably in the range of 10-40%. In current implementations for use with low-viscosity lubricants (oils), TTI is set in the range of 5-60 minutes, and preferably in the range of 10-50 minutes. In current implementations for use with high-viscosity lubricants (grease), TTI is set in the range of 2-12 hours, and preferably in the range of 4-10 hours. However, there may be implementations with high-viscosity lubricants, for example when large amounts of grease are being delivered, in which the TTI may be set in the range for low-viscosity lubricants.

The process 50 in FIG. 5 may be part of step 31 in FIG. 3A. The process 50 is not only applicable when the calculation arrangement 5 is separated into a first device 5A and a second device 5B as shown in FIG. 1B. For example, a modified version of the process 50 may be performed by a unitary calculation arrangement 5 to reduce the amount data that needs to be processed for pulse detection. In step 57 of such a modified version, the minimum and maximum values, and optionally the end values, are added to a pressure array, by analogy with step 609 in FIG. 6A (below).

FIG. 6A is a flow chart of a processing method 600 that may be performed in the second device 5B in FIG. 1B, for example by the control unit 21. The method 600 corresponds to steps 32-33 in FIG. 3A and presumes that the first device 5A intermittently transmits data packets in accordance with FIG. 5.

In step 601, the second device 5B waits for a data packet to be received by the communication unit 20. A data packet is received in step 602. If the data packet has already been received, step 603 returns to step 601, otherwise the process 600 proceeds to perform steps 604-613. As shown in FIG. 6A, steps 604-613 are performed for each unique data packet that arrives at the second device 5B. In step 604 (optional), status data is extracted from the data packet and stored in memory of the second device 5B. In step 605 (optional), temperature data for presentation (cf. FIG. 8) to the user is extracted from the data packet and stored in memory. The temperature data may be given by any of the temperature values in the data packet. In step 606 (optional), the pressure values in the data packet are extracted and processed for temperature adjustment, for example as described for step 32 in FIG. 3A. In step 607, the pressure values are extracted and stored in memory together with the associated time values, which are also extracted from the data packet. In step 608, pressure and time values within an analysis time window are retrieved from memory. The analysis time window is set to at least exceed the pulse duration, and preferably to exceed the pulse interval (PP in FIG. 4A). FIG. 4B shows an example of an analysis time window, ΔA, that may be used at an analysis time point, AT. The analysis time point may be the time point when step 608 is performed. In step 609, a pressure array is populated with a time series of pressure values given by the pressure and time values retrieved in step 608. The populated pressure array corresponds to the above-mentioned monitoring sequence, and step 608 corresponds to step 33A in FIG. 3B.

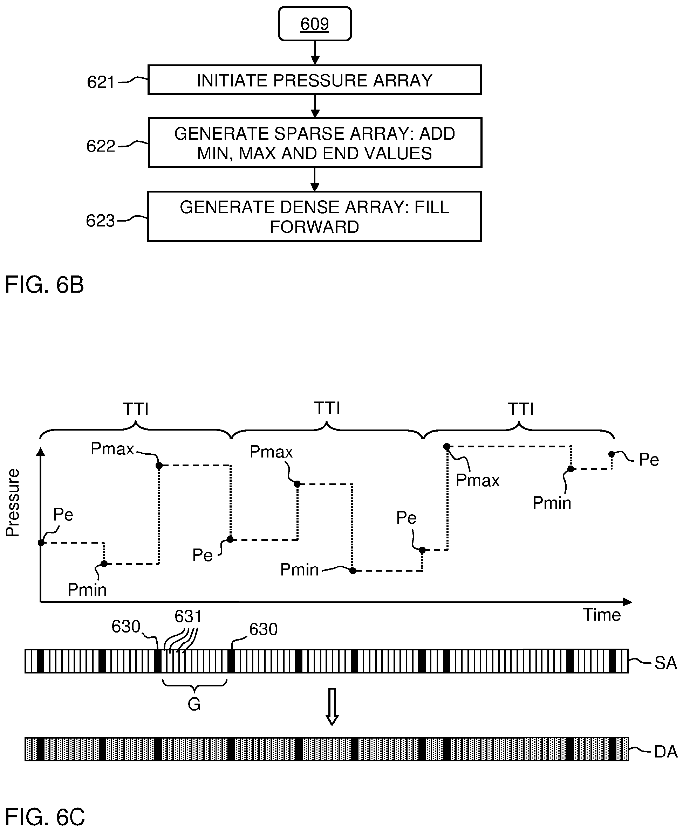

An example of step 609 is shown in FIG. 6B. In step 621, the pressure array is initiated. The pressure array is a conventional data structure that comprises an indexed collection of elements, for example a vector or a tensor, where each element corresponds to a time value. In step 622, a sparse array is generated by adding the pressure values to the pressure array at elements corresponding to the respective associated time value. Thus, the relative timing of pressure values in the pressure array corresponds to the relative timing of the pressure values in the pressure signal. The generation of the sparse array is exemplified in FIG. 6C. The graph in FIG. 6C shows the pressure values from three consecutive data packets arranged along a time axis based on their associated time values. Each data packet corresponds to a TTI as indicated at the top of the graph. In this example, each data packet includes Pmax, Pmin and Pe, where Pe is an end value. The sparse array, SA, is generated by adding the respective pressure value to the element that corresponds to the associated time value. In FIG. 6C, populated and non-populated elements 630, 631 and shown in black and white, respectively. As seen, the sparse array comprises populated elements 630 separated by gaps G of non-populated (non-assigned) elements 631.

After step 622, the data in the sparse array is processed for generation of a dense array in step 623, by adding selected values to the elements 631 in the gaps G of the sparse array. The dense array, DA, is illustrated in FIG. 6C, with dotted elements being populated by step 623. The respective gap G is bounded by two populated elements 630, which thus contain bounding pressure values. The elements 631 in the gap G is populated by one of the bounding pressure values. In the example of FIGS 6B-6C, step 622 involves a forward-filling of the respective gap, in which the earliest of the bounding pressure values is added to all elements in the gap G. The result of such forward-filling is indicated by dashed horizontal lines in the top graph of FIG. 6C. Thus, the dense array defines a step-shaped pressure signal. In an alternative, step 622 involves a backward-filling, in which the latest of the bounding pressure values is added to all elements in the respective gap G.

Reverting to FIG. 6A, step 609 is followed by step 610, in which a pulse search is performed in the populated pressure array from step 609. Step 610 may be performed in accordance with steps 33B-33E in FIG. 3B, for example by the pulse detection unit 22 in FIG. 1B. A detailed example of step 610 will be described further below with reference to FIG. 6D.

Step 610 results in a list of pulses, given at least by a respective time value. In step 611, the time values of the detected pulses are stored in memory. Since steps 606-613 are performed for each unique data packet that arrives at the second device 5B, the number of detected pulses in the memory will be expanded over time. Further, if consecutive analysis windows (ΔA in FIG. 4B) overlap, the same pulse may be detected in one or more consecutive repetitions of steps 604-613. In such an implementation, step 611 may refrain from adding a detected pulse if it is already stored in the memory. It is also conceivable, that step 611 deletes a previously detected pulse from the memory if it is not detected in subsequent repetitions of steps 604-613.

In step 612, the number of pulses per unit time may be determined based on the time values of the detected pulses stored in memory. Step 612 is part of step 34 in FIG. 3A.

In step 613, the number of pulses per unit time is converted into a supplied amount of lubricant per unit time. Step 613 may also involve an estimating the remaining amount of remaining lubricant in the supply 3. The resulting data is stored in memory. Step 613 may be performed by analogy with step 34B in FIG. 3A.

FIG. 6D shows a detailed example of the pulse search in step 610. In step 631, the populated pressure array from step 609 is input. In step 632, the values of search parameters to be used are input. In the illustrated example, the search parameters are the gradient threshold (GTH), the decay threshold (DY), and the decay period (DYP). As will be explained below, DYP is also used as skip distance (SD). Step 632 may retrieve the search parameter values from memory. In step 633, a gradient array, GRAD, is generated based on the pressure array. The gradient array represents a first-order derivative of the pressure values in the pressure array. For example, the gradient array may be populated by gradient values, which are given by the difference between consecutive pressure values in the pressure array. It is realized the gradient array will be a sparse array when the pressure array is generated in accordance with step 609 in FIG. 6B. Although not shown, step 633 also initiates a pulse array of the same length as GRAD. In step 634, two index variables (POS, SKIP) are initiated and set to a respective start value. POS indicates a current element in GRAD, which contains L elements. SKIP indicates the number of elements in GRAD to be skipped. In the illustrated example, POS and SKIP are both set to zero (0), although other values are possible. For example SKIP may be set to a positive integer to skip an initial part of GRAD if deemed necessary. In step 635, POS is compared to L. If POS is not larger than L, the search has not yet reached the end of GRAD and step 635 proceeds to step 636. If SKIP is larger than zero (0), step 636 proceeds to step 637, in which SKIP is decremented, and step 638, in which POS is incremented. Step 637 then returns to step 635. It is realized that steps 635-638 are repeated to skip forward in GRAD. If SKIP is equal to zero (0), step 636 proceeds to step 639, in which the gradient value at POS in GRAD is compared to GTH. If the gradient value does not exceed GTH, step 639 proceeds to step 638, which increments POS. If the gradient value exceeds GTH and a rising edge has been detected, step 639 proceeds to step 640. Step 640 performs a precautionary check that the decay period (DYP) is accommodated within GRAD, by verifying that the remaining number of elements (L-POS) is at least equal to DYP. If so, the sum of the gradient values within DYP is calculated in step 641, and the resulting sum is compared to DY in step 642. If the sum does not exceed DY, the decay criterion is not fulfilled and step 642 proceeds to step 638. If the sum exceeds DY, a valid decay has been detected after the rising edge and step 642 proceeds to step 643. In step 643, a pulse is indicated in the pulse array by adding a dedicated value at POS. The location of the pulse is thereby aligned with the detection of the rising edge. Step 643 then sets SKIP to DYP and proceeds to step 638. By setting SKIP to DYP, steps 635-638 are repeated to skip forward by DYP in GRAD. When the end of GRAD is reached at step 635, or the decay period (DYP) is not accommodated within GRAD at step 640, the pulse array is output for use by step 611 in FIG. 6A.

It is to be understood that FIG. 6D is a non-limiting example of a pulse detection algorithm. There are alternative techniques for detecting the pulses in the populated pressure array, for example period analysis, frequency analysis, etc. Further, there are many alternative algorithms for evaluating the decay of the pulse. For example, a representative decay pulse profile (DPR) may be recorded and saved for use as a template in a comparison using a best fit algorithm, for example based on SAD, MAD, SS, etc.

It is realized that the generation of the gradient array, GRAD, facilitates the subsequent processing by reducing the detection of the rising edge to a simple comparison of values and the decay calculation to simple summation. Further, as noted above, GRAD is a sparse array when the underlying pressure array is based on reduced pressure data (FIGS 6B-6C). Such a sparse array enables processing-efficient search for pulses.

The skilled person understands that the processing method 600 in FIG. 6A is not limited to processing of reduced pressure data, but is applicable to any monitoring sequence that is generated based on a pressure signal with proper adaptation of step 609. Further, the pulse search according to FIG. 6D is applicable to a pressure array populated by any such monitoring sequence.

It is realized that the evaluation of the predefined decay criterion in relation to the respective rising edge generally improves the accuracy of the pulse detection. However, the use of a decay criterion for pulse detection is optional. In some installations, the pulses may occur in the pressure data without a noticeable decay phase. For example, a check valve may be mounted in the machine (cf. 1 in FIG. 1A) upstream of the object to be lubricated. The check valve may be installed to avoid the lubricant to flow backwards out of the machine. In particular when thick grease is used in combination with a check valve, it may be disadvantageous to use a decay criterion for pulse detection, since the check valve may not release (open) every time a pressure pulse is created by the lubricator (cf. 2 in FIG. 1A). FIG. 2E is a plot of a pressure signal obtained in an installation with a spring-loaded check valve for a time period of slightly more than 9 days, in which lubrication is initiated approximately 3 times per day. As seen, the pressure data comprises segments in the form of a staircase with stepwise increasing pressure followed by a sudden pressure drop over multiple steps corresponding to a release of the check valve. When the lubricated machine produces pressure data with this stepwise appearance, each pulse may be detected solely based on the pressure gradient, i.e., the rise in pressure over time. The gradient-based detection has the general advantage of being capable of detecting the pulse independent of the pressure level in the pressure data. Thus, a pulse is detected provided that a gradient in the pressure data exceeds a threshold value (cf. GTH in FIG. 4A), and optionally provided that the amplitude of the rising edge exceeds a second threshold value (cf. ATH in FIG. 4A).

The method 30 in FIG. 3A is applicable irrespective of how the pulse detection processing is performed. The example in FIG. 3B is modified if the decay criterion is omitted. In one example, the evaluation step 33C in FIG. 3B is omitted, and step 33D is modified so that the pulse data is stored for each rising edge detected by step 33B. In another example, step 33C is retained and modified to instead evaluate the time spacing between the rising edges from step 33B in relation to a nominal pulse interval (if known), and step 33D stores pulse data only for rising edges that approximately match the nominal pulse interval. The evaluation of the time spacing may also be used in the pulse detection procedure described with reference to FIG. 3B, i.e., in combination with the evaluation of a decay criterion. The data reduction process described with reference to FIG. 5 is equally applicable when the decay criterion is omitted. If the decay criterion is omitted in the pulse detection method of FIGS 6A-6D, steps 640-642 in FIG. 6D will be omitted, and step 643 may add a pulse at POS for each rising edge that is detected by step 639. It may be noted that SKIP may be set to DYP in step 643 even if steps 640-642 are omitted. In such implementations, DYP may not be related to the decay but will define the number of steps that should be skipped in GRAD to speed up the search for pulses in GRAD.

FIG. 7 is a flow chart of an example analysis procedure 700 which may be performed in parallel with the processing method 600 in FIG. 6A. The procedure 700 may be part of step 34 in FIG. 3A and may be performed by the analysis unit 23 in FIG. 1B. The procedure 700 is performed by a second device 5B, which is configured to received and process data packets from a plurality of first devices 5A. Each data packet includes an identifier of the originating first device. The number of first devices is represented by a parameter NUM, and the first devices are enumerated from 0 to NUM-1. An index variable DEVICE# indicates a current device. In step 701, DEVICE# is set to zero (0). The method starts by evaluating, in step 702, if a data packet has been received as expected (within TTI) from the current device. If not, step 702 proceeds to step 703, which sets a corresponding alarm status and proceeds to step 705. The alarm status may cause step 35 (FIG. 3A) to present an alarm indicator to the user (cf. STATUS in FIG. 8). Optionally, step 35 may signal the alarm status to the user in other ways, for example by transmission of a digital message (email, text message, etc.). If the data packet has been received in step 702, the procedure proceeds to step 704, which evaluates if the lubrication is acceptable. For example, lubrication may be deemed unacceptable if the number of pulses determined by step 612 is outside an allowable range. If so, the procedure proceeds to step 703, which sets a corresponding alarm status. If the lubrication is deemed acceptable in step 704, the procedure proceeds to step 705, which increments DEVICE#. If DEVICE # equals NUM in step 706, all devices have been analyzed and the procedure is terminated. Otherwise the procedure returns to step 702.

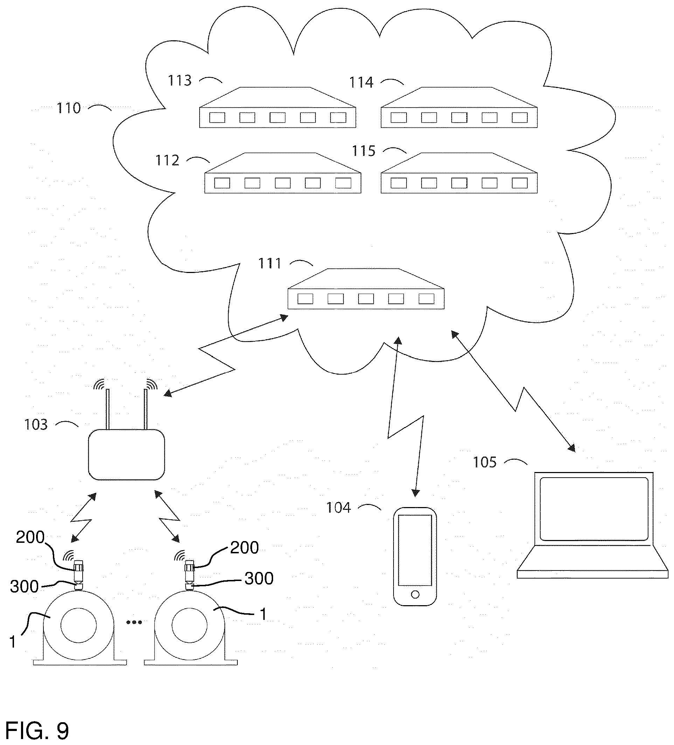

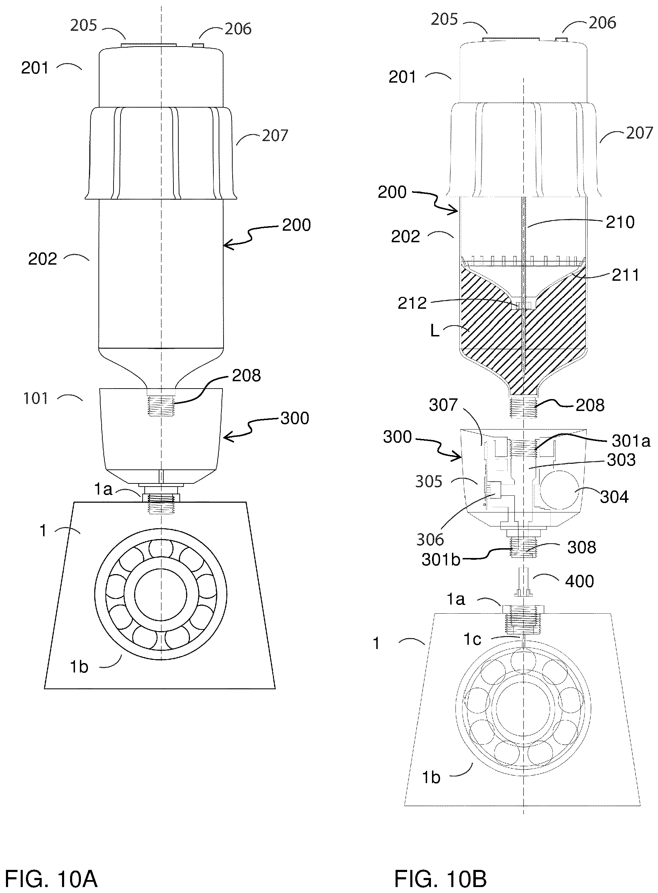

FIGS 9, 10A and 10B depict an example implementation of a monitoring system in relation to a plurality of single-point lubrication systems. Each lubrication system is implemented as a unitary lubrication device 200, which contains a lubrication controller 201 and lubrication container 202. The lubrication device 200 is of conventional construction. The lubrication controller 201 corresponds to the lubricator 2 in FIG. 1A and comprises control logic, an electric motor and a battery. The lubrication controller 201 further comprises a user interface that enables user interaction, for example to switch the lubrication controller on and off, enter control data, display internal data, etc. In the illustrated example, the user interface comprises a screen 205 and a button 206. The lubrication container 202 corresponds to the supply 3 in FIG. 1A and is removably attached to the lubrication controller 201 by a threaded ring 207. The lubrication container 202 contains a lubricant L and defines a threaded outlet connector 208, which is adapted for engagement with a threaded nipple 1a that defines a lubrication point on a machine 1. The machine 1 comprises an object 1b to be lubricated, here a bearing, and defines an internal channel 1c for guiding lubricant from the nipple 1a to the bearing 1b. A threaded drive shaft 210 extends axially inside the lubrication container 202 and is mechanically connected to the electric motor (not shown) in the lubrication controller 201. The drive shaft 210 extends centrally through a piston 211, which is arranged for sliding motion inside the lubrication container 202. The external threads on the drive shaft 210 are engaged with internal threads of a nut 212, which is fixed to the piston 211. Thereby, as the drive shaft 210 is driven to rotate by the electric motor, the piston 211 is driven downwards to force lubricant L through the outlet connector 208. Conventionally, the lubrication device 200 would be attached to the nipple 1a to supply lubricant L to the bearing 1b.

However, as seen in FIGS 10A-10B, a sensor device 300 is installed intermediate the lubrication device 200 and the machine 1, to receive and guide the lubricant from the lubrication device 200 to the lubrication point 1a. The sensor device 300 defines a threaded inlet connector 301a for engagement with the outlet connector 208 of the lubrication device 200, and a threaded outlet connector 301b for engagement with the threaded nipple 1a. An internal guide channel 303 extends from the inlet connector 301a to the outlet connector 301b. The guide channel 303 corresponds to the lubrication path 4 in FIG. 1A. In the illustrated example, the sensor device 200 comprises a battery 304, a controller PCB 305 with a microprocessor, memory and a communication circuit, a pressure sensor 306, and an antenna 307 connected to the communication circuit on the controller PCB 305. The controller PCB 305 is configured to implement the first calculation device 5A in FIG. 1B, and the pressure sensor 306 corresponds to the pressure sensor 10 in FIG. 1A.

FIG. 9 shows a plurality of lubrication devices 200 installed on a plurality of machines 1, with a respective sensor device 300 being interposed between the lubrication device 200 and the machine 1. The sensor devices 300 form part of a system for monitoring the lubrication at the respective lubrication point 1a. Each sensor device 300 in configured, by its controller PCB 305, to transmit data packets comprising measurement data (MD in FIG. 1B), for example by wireless communication (e.g., 3G, 4G, 5G, NB-IoT, Wi-Fi, ZigBee, Thread, Bluetooth, Wi-SUN, Amazon Sidewalk, 802.15.4, or a proprietary protocol). The radio system may optionally be meshed, frequency hopping or using ultra-wideband technology for best range and energy performance. The data packets from the sensor device 300 are received by a local gateway 103, which is configured to connect the sensor devices 300 to a network, for example the Internet. For example, the gateway 103 may have sufficient capacity to connect 1-100 sensor devices 300 to the network. By the gateway 103, data packets are transferred to a processing infrastructure 110, for example cloud-based, which implements the second calculation device 5B in FIG. 1B. In the illustrated example, the infrastructure 110 comprises a firewall 111, which forms the connection point for all gateways 103 and client devices. In FIG. 9, the infrastructure 110 further comprises a message broker 112 (e.g., MQTT), a receiver server 113, which is registered (subscribed) to receive data packages from all sensor devices 300, a database unit 114 for storage of data used and produced during processing of the incoming data packets from the sensor devices 300, and a web server 115, which is configured to run server software that implements the functionality of the second calculation device 5B and provides a graphical user interface (GUI) and an API (Application Programming Interface) for all client devices. The operational data that is determined by the infrastructure 110 is thereby presented to users on client devices, represented by a mobile phone 104 and a computer 105.

After extensive testing, the present Applicant has realized that it may be beneficial to be able to adjust the pulses that are detected by the pressure sensor, for example in terms of their amplitude. As seen in FIGS 2A-2D, the amplitude differs significantly between installations. For example, the amplitude is affected by the type of lubricant, the length of the lubrication path, and the configuration downstream of the lubrication point. Large variations in pulse amplitude between installations make pulse detection more difficult, requiring a pressure sensor with large dynamic range and high resolution.

The present Applicant has found that this problem is mitigated by arranging a dedicated restriction device in the lubrication path, downstream of the pressure sensor. The restriction device is configured to define an open passage for the lubricant. The configuration of the open passage defines the flow resistance through the lubrication path and thus the amplitude of the pulsations in the lubricant at the location of the pressure sensor. Thus, the amplitude of the pulses that are detected by the pressure sensor is adjustable if the configuration of the open passage is adjustable.

In some embodiments, the adjustable configuration of the open passage is achieved by providing a set of restriction devices for removable installation in the lubrication path. Each restriction device has a fixed configuration of the open passage, and the restriction devices in the set differ by the configuration of the open passage. For example, the size (area) of the open passage may differ between restriction devices. The open passage may be defined by any number of individual channels, and different restriction devices may comprise different numbers of channels and/or different sizes of the channels. When the monitoring system is installed, the operator may install a selected restriction device to achieve at least a minimum amplitude of the pulses in the pressure signal. The selection of restriction device may be based on tabulated data. For example, different restriction devices may be assigned for use with lubricants of different properties. Alternatively or additionally, the monitoring system may be operated in an installation mode, in which the operator is able to test different restriction devices and monitor the pulse amplitude.

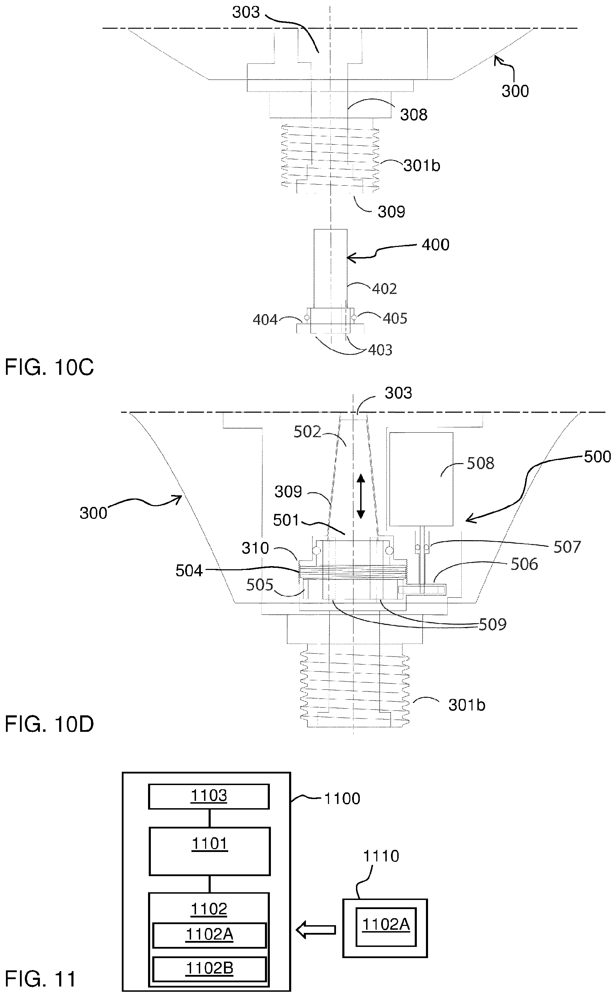

FIG. 10B shows a restriction device 400, also denoted control plug, which is inserted into the outlet connector 301b of the sensor device 300. A detailed example of the control plug 400 is shown in FIG. 10C, which is a side view with internal parts shown. The control plug 400 is configured to define a co-axial channel of well-defined size in the outlet portion 308 of the guide channel 303. The control plug 400 comprises a cylindrical stem 402 with an outer diameter of high precision. The stem 402 is configured for insertion through the open end 309 of the outlet connector 301b and into the outlet portion 308 of the guide channel 303. The outlet portion 308 is cylindrical and has an inner diameter of high precision. The gap between the outlet portion 308 and the stem 402 defines the co-axial channel. A flange 404 is arranged on one end of the stem 402 to define a mechanical stop for form-fitted engagement with a corresponding structure within the outlet connector 301b. One or more release channels 403 are defined in the flange 404 to allow lubricant to flow from the co-axial channel and into the lubrication point 1a. When the sensor device 300 is mounted to the lubrication point 1a, the control plug 400 is pressed towards the outlet connector 301b. A seal 405, for example an O-ring or gasket, is fitted to the control plug 400 to seal the mechanical interface between the control plug 400 and the outlet connector 301b. Different control plugs 400 in a set of control plugs may differ by one or more of the diameter of the stem 402, the number of release channels 403, or the size of the cross-sectional area of the release channels 403.

In some embodiments, the adjustable configuration of the open passage is achieved by providing a restriction device that allows mechanical adjustment of the open passage. Such a restriction device comprises a mechanism for positioning one or more moveable elements in relation to one of more channels that define the open passage. An example of an adjustable restriction device 500 is depicted in FIG. 10D, which is a side view with internal parts shown. The restriction device 500 is integrated into the sensor device 300 and configured to define a co-axial channel of adjustable size within the guide channel 303. The restriction device 500 comprises a plug 501 with a cone-shaped portion 502. The plug 501 is installed for sliding movement within a guide channel portion 309 which is cone-shaped in correspondence with the plug 501. As the plug 501 is moved in relation to the guide channel portion 309, as indicated by a double-ended arrow, a variable gap is defined between the portions 309, 502, forming the co-axial channel. One or more release channels 509 are defined in the end portion of the plug 501 to allow lubricant to flow from the co-axial channel and into the outlet connector 301b. The sliding motion of the plug 501 is controlled by an electric motor 508 with a rotatable shaft 507. A smaller gear 506 is fixedly attached to the shaft 507 and engaged with a larger gear 505 on an end portion of the plug 501. Thereby, as the shaft 507 is rotated by the motor 508, the plug 501 is rotated within the guide channel 303. The end portion of the plug 501 further comprises a fine thread 504, which is engaged with a fine thread 310 on the wall of the guide channel 303. Thereby, as the plug 501 rotated, the plug 501 is driven to move axially along the guide channel 303 to vary the size of the coaxial channel.

The sensor device 30 may be configured to automatically adjust the restriction device 500 to achieve an acceptable amplitude of the pulses in the pressure signal. For example, the sensor device 30 may be set in an installation mode, in which the control circuitry operates the electric motor 508 to adjust the location of the plug 501 based on the pressure signal from the pressure sensor 306.

It should be emphasized that FIGS 10C-10D are merely given as examples. For example, the length of the open passage may differ between restriction devices in a set. Likewise, the length of the open passage may be mechanically adjustable in an adjustable restriction device. Further, instead of using an electric motor, mechanical adjustment may be made manually by an operator. Many alternative mechanisms for adjusting the flow resistance are conceivable, for example mechanisms in use for adjusting fluid flow in water taps or radiators. Any number of moveable elements may be adjusted in relation of any number of channels to adjust the flow resistance through the restriction device 500. Further, the adjustable restriction device 500 in FIG. 10D may be configured to be removable from the sensor device 300. It is also to be noted that the restriction devices as described herein may alternatively be mounted within the nipple 1a.

Although not shown in FIGS 10C-10D, it may be beneficial to arrange a sieve or filter upstream of the restriction device 400, 500 to mitigate the risk that the open passage within the restriction device gets clogged by particles in the lubricant. Preferably, such a sieve is removeable for replacement or cleaning.

The foregoing description is given under the assumption that the pulsations in the flow of lubricant are inherent to the operation of the lubricator (2 in FIG. 1A). However, the monitoring technique described herein is also applicable to lubricators that do not generate such pulsations, for example some types of gas-driven lubricators. Such lubricators may be re-configured by installation of a pulse generator, which is operated to generate pulses whenever the lubricator is operated to supply lubricant. For example, the pulse generator may be installed to produce the pulsations in the lubricant supply (3 in FIG. 1A).

The calculation arrangement 5, the first device 5A, and the second device 5B as described herein may be implemented by one or more software-controlled computer resources. FIG. 11 schematically depicts such a computer resource 1100, which comprises processor circuitry 1101, computer memory 1102, and a communication interface 1103 for input and/or output of data. The computer resource 1100 may or may not be a unitary device. The processor circuitry 1101 may, e.g., include one or more of a CPU ("Central Processing Unit"), a DSP ("Digital Signal Processor"), a microprocessor, a microcontroller, an ASIC ("Application-Specific Integrated Circuit"), a combination of discrete analog and/or digital components, or some other programmable logical device, such as an FPGA ("Field Programmable Gate Array"). A control program 1102A comprising computer instructions is stored in the memory 1102 and executed by the processor circuitry 1101 to perform any of the methods, operations, functions or steps described in the foregoing. As indicated in FIG. 11, the memory 1102 may also store control data 1102B for use by the processor circuitry 1101, including but not limited to the above-mentioned search parameters, the gradient array, the pulse array, etc. The control program 1102A may be supplied to the computer resource 1100 on a computer-readable medium 1110, which may be a tangible (non-transitory) product (e.g. magnetic medium, optical disk, read-only memory, flash memory, etc.) or a propagating signal.

While the subject of the present disclosure has been described in connection with what is presently considered to be the most practical embodiments, it is to be understood that the subject of the present disclosure is not to be limited to the disclosed embodiments, but on the contrary, is intended to cover various modifications included within the scope of the appended claims.

Further, while operations are depicted in the drawings in a particular order, this should not be understood as requiring that such operations be performed in the particular order shown or in sequential order, or that all illustrated operations be performed, to achieve desirable results. In certain circumstances, parallel processing may be advantageous.

In the foregoing, general solutions and more detailed examples have been outlined, with reference to the drawings. Unless clearly contradictory, the features of any example provided herein may be combined.

## Claims

1. A system for monitoring operation of a lubrication apparatus (2), which is connected to provide a pulsating flow of lubricant on a lubrication path (4) to a lubrication point (1a) of a machine (1), said system comprising:
a pressure sensor (10; 306) configured to provide a pressure signal representing measured fluid pressure in the lubrication path (4), and
a calculation arrangement (5) configured to process pressure data in the pressure signal for detection of pulses, and to determine an operating status of the lubrication apparatus (2) based on the detected pulses,
wherein the calculation arrangement (5) is configured to process a time sequence of monitoring values given by the pressure data for detection of a rising edge with a gradient in excess of a threshold value (GTH), **characterized in that** the calculation arrangement (5) is further configured to:
allocate a pulse at the rising edge,
count the detected pulses, and
determine a malfunction when a number of detected pulses per unit time is outside a predefined range.

2. The system of any preceding claim, wherein the calculation arrangement (5) is further configured to estimate an amount of lubricant supplied to the lubrication point on the lubrication path (4) based on the detected pulses.

3. The system of any preceding claim, wherein the calculation arrangement (5) is configured to selectively increase a sampling rate of the pressure signal from pressure sensor (10; 306) in synchronization with a pulsation interval of the pulsating flow of lubricant.

4. The system of any preceding claim, wherein the calculation arrangement (5) is configured to, when a rising edge is detected, evaluate monitoring values subsequent to the rising edge in relation to a decay criterion, and allocate the pulse at the rising edge provided that the decay criterion is fulfilled.

5. The system of claim 4, wherein the decay criterion is fulfilled when the time sequence of monitoring values decreases by at least a predefined amount (DY) in relation to a peak pressure of the rising edge during a predefined decay period (DYP) after the rising edge.

6. The system of claim 4 or 5, wherein the decay criterion is fulfilled when the time sequence of monitoring values corresponds to a predefined decay profile (DPR) during a predefined decay period (DYP) after the rising edge.

7. The system of any preceding claim, wherein the calculation arrangement (5) is further configured to, after allocating the pulse at the rising edge, skip a sub-sequence of monitoring values in the time sequence in relation to the rising edge, process the time sequence without the sub-sequence for detection of a further rising edge, wherein the sub-sequence has an extent (SD) in time that is predefined in relation to the pulsating flow of lubricant.

8. The system of any preceding claim, wherein the calculation arrangement (5) is configured to perform a data reduction process (50), in which the pressure signal is processed for detection of characteristic pressure values within non-overlapping and consecutive detection time periods (TTI), wherein the calculation arrangement (5) is configured to generate a sparse array (SA) that defines a time sequence of pressure values and includes the characteristic pressure values at respective time points, wherein the calculation arrangement (5) is configured to obtain the time sequence of monitoring values based on the sparse array (SA).

9. The system of claim 8, wherein the characteristic pressure values comprise a minimum pressure value (Pmin) and a maximum pressure value (Pmax) of the respective detection time period (TTI), and optionally an end pressure value (Pe) at an end of the respective detection time period (TTI).

10. The system of claim 8 or 9, wherein the sparse array (SA) comprises characteristic pressure values separated by gaps (G) of non-assigned array elements (631), wherein the calculation arrangement (5) is further configured to generate a dense array (DA) from the sparse array (SA), by filling a respective gap (G) bounded by two consecutive characteristic pressure values by adding one of the two characteristic pressure values to one or more of the non-assigned array elements (631) within the respective gap (G), and wherein the calculation arrangement (5) is configured to obtain the time sequence of monitoring values based on the dense array (DA).

11. The system of any one of claims 8-10, wherein the calculation arrangement (5) comprises a first calculation device (5A) and a second calculation device (5B), wherein the first calculation device (5A) is connected to receive the pressure signal from the pressure sensor (10; 306) and configured to perform the data reduction process (50) and transfer the characteristic pressure values to the second calculation device (5B), wherein the second calculation device (5B) is configured to receive the characteristic pressure values from the first calculation device (5A) and generate the sparse array (SA).

12. The system of any preceding claim, further comprising: a restriction device (400; 500), which is arranged downstream of the pressure sensor (10; 306) in the lubrication path (4) and configured to define an open passage for the lubricant, wherein the open passage is dimensioned so that the pulsating flow is represented by pulses of at least a minimum amplitude in the pressure signal.

13. The system of claim 12, wherein the restriction device (400) is configured for removable installation in the lubrication path (4), has a fixed size of the open passage (403) and is included in a set of restriction devices, wherein the restriction devices in the set differ at least by the fixed size of the open passage and are adapted for use with lubricants of different properties.

14. The system of claim 12, wherein the restriction device (500) is configured for mechanical adjustment of the open passage by positioning of at least one moveable element (501) in relation of one or more channels (309) that define the open passage in the restriction device (500).

15. The system of any preceding claim, wherein the calculation arrangement (5) is configured to selectively increase a sensitivity for detecting the rising edge in the time sequence of monitoring values in synchronization with a pulsation interval of the pulsating flow of lubricant.

16. A method of monitoring operation of a lubrication apparatus (2), which is connected to provide a pulsating flow of lubricant on a lubrication path (4) to a lubrication point (1a) of a machine (1), said method comprising:
obtaining (31) a pressure signal representing measured fluid pressure in the lubrication path (4) from a pressure sensor (10; 306);
processing (33) the pressure signal for detection of pulses, and
determining (34) an operating status of the lubrication apparatus (2) based on the detected pulses,
wherein said processing (33) comprises processing (33B) a time sequence of monitoring values given by pressure data in the pressure signal for detection of a rising edge with a gradient in excess of a gradient threshold, **characterized in**
**that** said processing (33) further comprises allocating (33D) a pulse at the rising edge, and
**that** said determining (34) comprises counting (34A) the detected pulses and determining (34A) a malfunction when a number of detected pulses per unit time is outside a predefined range.

## Patentansprüche

1. System zum Überwachen des Betriebs einer Schmiervorrichtung (2), die derart verbunden ist, dass einem Schmierpunkt (1a) einer Maschine (1) ein pulsierender Schmiermittelfluss auf einem Schmierweg (4) bereitgestellt wird, wobei das System Folgendes umfasst:
einen Drucksensor (10; 306), der konfiguriert ist, ein Drucksignal bereitzustellen, das einen gemessenen Fluiddruck im Schmierweg (4) darstellt, und
eine Berechnungsanordnung (5), die konfiguriert ist, Druckdaten im Drucksignal zur Detektion von Impulsen zu verarbeiten und auf der Grundlage der detektierten Impulse einen Betriebszustand der Schmiervorrichtung (2) zu bestimmen,
wobei die Berechnungsanordnung (5) konfiguriert ist, eine zeitliche Abfolge von Überwachungswerten, die durch die Druckdaten gegeben sind, zur Detektion einer ansteigenden Flanke mit einem Gradienten, der einen Schwellenwert (GTH) überschreitet, zu verarbeiten, **dadurch gekennzeichnet, dass** die Berechnungsanordnung (5) ferner konfiguriert ist zum:
Zuordnen eines Impulses zur ansteigenden Flanke, Zählen der detektierten Impulse und
Bestimmen einer Fehlfunktion, wenn eine Anzahl der detektierten Impulse pro Zeiteinheit außerhalb eines vorgegebenen Bereichs liegt.

2. System nach einem der vorhergehenden Ansprüche, wobei die Berechnungsanordnung (5) ferner konfiguriert ist, eine Schmiermittelmenge, die dem Schmierpunkt auf dem Schmierweg (4) zugeführt wird, auf der Grundlage der detektierten Impulse zu schätzen.

3. System nach einem der vorhergehenden Ansprüche, wobei die Berechnungsanordnung (5) konfiguriert ist, eine Abtastrate des Drucksignals vom Drucksensor (10; 306) in Synchronisation mit einem Pulsationsintervall des pulsierenden Schmiermittelflusses wahlweise zu erhöhen.

4. System nach einem der vorhergehenden Ansprüche, wobei die Berechnungsanordnung (5) konfiguriert ist, dann, wenn eine ansteigende Flanke detektiert wird, Überwachungswerte, die auf die ansteigende Flanke folgen, in Bezug auf einem Abklingkriterium auszuwerten und den Impuls der ansteigenden Flanke zuzuordnen, vorausgesetzt, dass das Abklingkriterium erfüllt ist.

5. System nach Anspruch 4, wobei das Abklingkriterium erfüllt ist, wenn die zeitliche Abfolge der Überwachungswerte in Bezug auf einen Spitzendruck der ansteigenden Flanke während eines vorgegebenen Abklingzeitraums (DYP) nach der ansteigenden Flanke mindestens um einen vorgegebenen Betrag (DY) abnimmt.

6. System nach Anspruch 4 oder 5, wobei das Abklingkriterium erfüllt ist, wenn die zeitliche Abfolge der Überwachungswerte während eines vorgegebenen Abklingzeitraums (DYP) nach der ansteigenden Flanke einem vorgegebenen Abklingprofil (DPR) entspricht.

7. System nach einem der vorhergehenden Ansprüche, wobei die Berechnungsanordnung (5) ferner konfiguriert ist, nach dem Zuordnen des Impulses zur ansteigenden Flanke eine Unterabfolge der Überwachungswerte in der zeitlichen Abfolge in Bezug auf die ansteigende Flanke zu überspringen, die zeitliche Abfolge ohne die Unterabfolge zur Detektion einer weiteren ansteigenden Flanke zu verarbeiten, wobei die Unterabfolge eine zeitliche Ausdehnung (SD) aufweist, die in Bezug auf den pulsierenden Schmiermittelfluss vorgegeben ist.

8. System nach einem der vorhergehenden Ansprüche, wobei die Berechnungsanordnung (5) konfiguriert ist, einen Datenverringerungsvorgang (50) durchzuführen, bei dem das Drucksignal zur Detektion charakteristischer Druckwerte innerhalb nicht überlappender und aufeinander folgender Detektionszeiträume (TTI) verarbeitet wird, wobei die Berechnungsanordnung (5) konfiguriert ist, eine dünnbesetzte Matrix (SA) zu erzeugen, die eine zeitliche Abfolge von Druckwerten definiert und die charakteristischen Druckwerte bei jeweiligen Zeitpunkten enthält, wobei die Berechnungsanordnung (5) konfiguriert ist, die zeitliche Abfolge von Überwachungswerten auf der Grundlage der dünnbesetzten Matrix (SA) zu erhalten.

9. System nach Anspruch 8, wobei die charakteristischen Druckwerte einen minimalen Druckwert (Pmin) und einen maximalen Druckwert (Pmax) des jeweiligen Detektionszeitraums (TTI) und wahlweise einen Enddruckwert (Pe) bei einem Ende des jeweiligen Detektionszeitraums (TTI) umfassen.

10. System nach Anspruch 8 oder 9, wobei die dünnbesetzte Matrix (SA) charakteristische Druckwerte, die durch Zwischenräume (G) von nicht zugewiesenen Matrixelementen (631) getrennt sind, umfasst, wobei die Berechnungsanordnung (5) ferner konfiguriert ist, aus der dünnbesetzten Matrix (SA) durch Befüllen eines jeweiligen Zwischenraums (G), der durch zwei aufeinander folgende charakteristische Druckwerte begrenzt wird, durch Hinzufügen eines der zwei charakteristischen Druckwerte zu einem oder mehreren der nicht zugewiesenen Matrixelemente (631) im jeweiligen Zwischenraum (G) eine dichte Matrix (DA) zu erzeugen, und wobei die Berechnungsanordnung (5) konfiguriert ist, die zeitliche Abfolge von Überwachungswerten auf der Grundlage der dichten Matrix (DA) zu erhalten.

11. System nach einem der Ansprüche 8-10, wobei die Berechnungsanordnung (5) eine erste Berechnungseinrichtung (5A) und eine zweite Berechnungseinrichtung (5B) umfasst, wobei die erste Berechnungseinrichtung (5A) derart verbunden ist, dass sie das Drucksignal vom Drucksensor (10; 306) empfängt, und konfiguriert ist, den Datenverringerungsvorgang (50) durchzuführen und die charakteristischen Druckwerte an die zweite Berechnungseinrichtung (5B) zu übertragen, wobei die zweite Berechnungseinrichtung (5B) konfiguriert ist, die charakteristischen Druckwerte von der ersten Berechnungseinrichtung (5A) zu empfangen und die dünnbesetzte Matrix (SA) zu erzeugen.

12. System nach einem der vorhergehenden Ansprüche, das ferner Folgendes umfasst: eine Begrenzungseinrichtung (400; 500), die dem Drucksensor (10; 306) nachgelagert im Schmierweg (4) angeordnet ist und konfiguriert ist, einen offenen Durchlass für das Schmiermittel zu definieren, wobei der offene Durchlass derart bemessen wird, dass der pulsierende Fluss durch Impulse mit mindestens einer minimalen Amplitude im Drucksignal dargestellt wird.

13. System nach Anspruch 12, wobei die Begrenzungseinrichtung (400) zur entnehmbaren Installation im Schmierweg (4) konfiguriert ist, eine feste Größe des offenen Durchlasses (403) aufweist und in einem Satz Begrenzungseinrichtungen enthalten ist, wobei sich die Begrenzungseinrichtungen in dem Satz mindestens durch die feste Größe des offenen Durchlasses unterscheiden und zur Verwendung mit Schmiermitteln mit unterschiedlichen Eigenschaften ausgelegt sind.

14. System nach Anspruch 12, wobei die Begrenzungseinrichtung (500) zur mechanischen Einstellung des offenen Durchlasses durch Anordnen mindestens eines beweglichen Elements (501) in Bezug auf einen oder mehrere Kanäle (309), die den offenen Durchlass in der Begrenzungseinrichtung (500) definieren, konfiguriert ist.

15. System nach einem der vorhergehenden Ansprüche, wobei die Berechnungsanordnung (5) konfiguriert ist, eine Empfindlichkeit zum Detektieren der ansteigenden Flanke in der zeitlichen Abfolge von Überwachungswerten in Synchronisation mit einem Pulsationsintervall des pulsierenden Schmiermittelflusses wahlweise zu erhöhen.

16. Verfahren zum Überwachen des Betriebs einer Schmiervorrichtung (2), die derart verbunden ist, dass einem Schmierpunkt (1a) einer Maschine (1) ein pulsierender Schmiermittelfluss auf einem Schmierweg (4) bereitgestellt wird, wobei das Verfahren Folgendes umfasst:
Erhalten (31) eines Drucksignals, das einen gemessenen Fluiddruck im Schmierweg (4) darstellt, von einem Drucksensor (10; 306);
Verarbeiten (33) des Drucksignals zur Detektion von Impulsen, und
Bestimmen (34) eines Betriebszustands der Schmiervorrichtung (2) auf der Grundlage der detektierten Impulse,
wobei das Verarbeiten (33) das Verarbeiten (33B) einer zeitlichen Abfolge von Überwachungswerten, die durch Druckdaten im Drucksignal gegeben sind, zur Detektion einer ansteigenden Flanke mit einem Gradienten, der einen Gradientenschwellenwert überschreitet, umfasst, **dadurch gekennzeichnet, dass**
das Verarbeiten (33) ferner das Zuordnen (33D) eines Impulses zur ansteigenden Flanke umfasst und
das Bestimmen (34) das Zählen (34A) der detektierten Impulse und das Bestimmen (34A) einer Fehlfunktion, wenn eine Anzahl der detektierten Impulse pro Zeiteinheit außerhalb eines vorgegebenen Bereichs liegt, umfasst.

## Revendications

1. Système de surveillance du fonctionnement d'un appareil (2) de lubrification, qui est raccordé pour fournir un écoulement pulsé de lubrifiant sur un trajet (4) de lubrification jusqu'à un point (1a) de lubrification d'une machine (1), ledit système comportant :
un capteur (10 ; 306) de pression configuré pour fournir un signal de pression représentant une pression de fluide mesurée sur le trajet (4) de lubrification, et
un agencement (5) de calcul configuré pour traiter des données de pression dans le signal de pression pour détecter des impulsions, et pour déterminer un état de fonctionnement de l'appareil (2) de lubrification sur la base des impulsions détectées,
l'agencement (5) de calcul étant configuré pour traiter une séquence temporelle de valeurs de surveillance données par les données de pression pour une détection d'un front montant d'une pente supérieure à une valeur seuil (GTH), **caractérisé en ce que** l'agencement (5) de calcul est en outre configuré pour :
attribuer une impulsion au front montant,
compter les impulsions détectées, et
déterminer un dysfonctionnement lorsqu'un nombre d'impulsions détectées par unité de temps est en dehors d'une plage prédéfinie.

2. Système selon l'une quelconque des revendications précédentes, l'agencement (5) de calcul étant en outre configuré pour estimer une quantité de lubrifiant fournie au point de lubrification sur le trajet (4) de lubrification sur la base des impulsions détectées.

3. Système selon l'une quelconque des revendications précédentes, l'agencement (5) de calcul étant configuré pour augmenter sélectivement une cadence d'échantillonnage du signal de pression provenant du capteur (10 ; 306) de pression en synchronisation avec un intervalle de pulsation de l'écoulement pulsé de lubrifiant.

4. Système selon l'une quelconque des revendications précédentes, l'agencement (5) de calcul étant configuré pour, lorsqu'un front montant est détecté, évaluer des valeurs de surveillance après le front montant en relation avec un critère de décroissance, et attribuer l'impulsion au front montant à condition que le critère de décroissance soit satisfait.

5. Système selon la revendication 4, le critère de décroissance étant satisfait lorsque la séquence temporelle de valeurs de surveillance diminue d'au moins une quantité prédéfinie (DY) par rapport à une pression de crête du front montant pendant une période de décroissance prédéfinie (DYP) après le front montant.

6. Système selon la revendication 4 ou 5, le critère de décroissance étant satisfait lorsque la séquence temporelle de valeurs de surveillance correspond à un profil de décroissance prédéfini (DPR) pendant une période de décroissance prédéfinie (DYP) après le front montant.

7. Système selon l'une quelconque des revendications précédentes, l'agencement (5) de calcul étant en outre configuré pour, après attribution de l'impulsion au front montant, sauter une sous-séquence de valeurs de surveillance dans la séquence temporelle en relation avec le front montant, traiter la séquence temporelle sans la sous-séquence pour la détection d'un front montant supplémentaire, la sous-séquence présentant une étendue (SD) dans le temps qui est prédéfinie en relation avec l'écoulement pulsé de lubrifiant.

8. Système selon l'une quelconque des revendications précédentes, l'agencement (5) de calcul étant configuré pour exécuter un processus (50) de réduction de données, le signal de pression étant traité pour la détection de valeurs de pression caractéristiques dans des périodes (TTI) de détection non chevauchantes et consécutives, l'agencement (5) de calcul étant configuré pour générer un tableau clairsemé (SA) qui définit une séquence temporelle de valeurs de pression et inclut les valeurs de pression caractéristiques à des instants respectifs, l'agencement (5) de calcul étant configuré pour obtenir la séquence temporelle de valeurs de surveillance sur la base du tableau clairsemé (SA).

9. Système selon la revendication 8, les valeurs de pression caractéristiques comprenant une valeur de pression minimale (Pmin) et une valeur de pression maximale (Pmax) de la période (TTI) de détection considérée, et éventuellement une valeur de pression de fin (PE) à une fin de la période (TTI) de détection considérée.

10. Système selon la revendication 8 ou 9, le tableau clairsemé (SA) comprenant des valeurs de pression caractéristiques séparées par des espaces (G) d'éléments (631) de tableau non attribués, l'agencement (5) de calcul étant en outre configuré pour générer un tableau dense (DA) à partir du tableau clairsemé (SA), en remplissant un espace respectif (G) délimité par deux valeurs de pression caractéristiques consécutives en ajoutant une des deux valeurs de pression caractéristiques à un ou plusieurs des éléments (631) de tableau non attribués dans l'espace respectif (G), et l'agencement (5) de calcul étant configuré pour obtenir la séquence temporelle des valeurs de surveillance sur la base du tableau dense (DA).

11. Système selon l'une quelconque des revendications 8 à 10, l'agencement (5) de calcul comprenant un premier dispositif (5A) de calcul et un second dispositif (5B) de calcul, le premier dispositif (5A) de calcul étant connecté pour recevoir le signal de pression provenant du capteur (10 ; 306) de pression et configuré pour réaliser le processus (50) de réduction de données et transférer les valeurs de pression caractéristiques au deuxième dispositif (5B) de calcul, le deuxième dispositif (5B) de calcul étant configuré pour recevoir les valeurs de pression caractéristiques provenant du premier dispositif (5A) de calcul et générer le tableau clairsemé (SA).

12. Système selon l'une quelconque des revendications précédentes, comprenant en outre : un dispositif (400 ; 500) de restriction, qui est agencé en aval du capteur (10 ; 306) de pression sur le trajet (4) de lubrification et configuré pour définir un passage ouvert pour le lubrifiant, le passage ouvert étant dimensionné de sorte que l'écoulement pulsé est représenté par des impulsions d'au moins une amplitude minimale dans le signal de pression.

13. Système selon la revendication 12, le dispositif (400) de restriction étant configuré pour une installation amovible sur le trajet (4) de lubrification, présentant une taille fixe du passage ouvert (403) et étant inclus dans un ensemble de dispositifs de restriction, les dispositifs de restriction dans l'ensemble différant au moins par la taille fixe du passage ouvert et étant adaptés pour être utilisés avec des lubrifiants de propriétés différentes.

14. Système selon la revendication 12, le dispositif (500) de restriction étant configuré pour un réglage mécanique du passage ouvert par positionnement d'au moins un élément mobile (501) par rapport à un ou plusieurs canaux (309) qui définissent le passage ouvert dans le dispositif (500) de restriction.

15. Système selon l'une quelconque des revendications précédentes, l'agencement (5) de calcul étant configuré pour augmenter sélectivement une sensibilité pour détecter le front montant dans la séquence temporelle de valeurs de surveillance en synchronisation avec un intervalle de pulsation de l'écoulement pulsé de lubrifiant.

16. Procédé de surveillance du fonctionnement d'un appareil (2) de lubrification, raccordé pour fournir un écoulement pulsé de lubrifiant sur un trajet (4) de lubrification jusqu'à un point (1a) de lubrification d'une machine (1), ledit procédé comprenant :
l'obtention (31) d'un signal de pression représentatif d'une pression de fluide mesurée sur le trajet (4) de lubrification à partir d'un capteur (10 ; 306) de pression ;
le traitement (33) du signal de pression pour la détection d'impulsions, et
la détermination (34) d'un état de fonctionnement de l'appareil (2) de lubrification à partir des impulsions détectées,
ledit traitement (33) comprenant le traitement (33B) d'une séquence temporelle de valeurs de surveillance données par des données de pression dans le signal de pression pour la détection d'un front montant d'une pente supérieure à un seuil de gradient, **caractérisé en**
**ce que** ledit traitement (33) comprend en outre l'attribution (33D) d'une impulsion au front montant, et ce que ladite détermination (34) comprend le comptage (34A) des impulsions détectées et la détermination (34A) d'un dysfonctionnement lorsqu'un nombre d'impulsions détectées par unité de temps se trouve en dehors d'une plage prédéfinie.
